# EUROPEAN PATENT SPECIFICATION

(11) **EP 1 568 753 B1**
(45) Date of publication and mention of the grant of the patent: **06.05.2009**
(21) Application number: 05004375.1
(22) Date of filing: 28.02.2005
(51) Int. Cl.: C09K 11/79, C09K 11/80, C09K 11/01, C09K 11/77

(54) **Phosphor and manufacturing method thereof, and LED light source using said phosphor**
Leuchtstoff und deren Herstellung und LED Lichtquelle diesen Leuchtstoff nutzend
Phosphore et méthode de sa fabrication et LED source de lumière en utilisant ce phosphore

(30) Priority: 27.02.2004 JP 2004055536; 14.07.2004 JP 2004207271; 28.07.2004 JP 2004220630
(43) Date of publication of application: 31.08.2005
(73) Proprietor: DOWA Electronics Materials Co., Ltd., Chiyoda-ku Tokyo 101-0021 (JP); Nichia Corporation, Anan-Shi, Tokushima 774-8601 (JP)
(72) Inventor: Nagatomi, Akira, Tokyo 101-0021 (JP); Sakane, Kenji, Tokyo 101-0021 (JP); Gotoh, Masahiro, Tokyo 101-0021 (JP); Yamashita, Shuji, Tokyo 101-0021 (JP)
(74) Representative: Grünecker, Kinkeldey, Stockmair & Schwanhäusser Anwaltssozietät

(56) References cited:
- EP-A- 1 104 799
- EP-A- 1 696 016
- WO-A-20/05049763
- WO-A-20/05052087
- WO-A-20/05078811
- US-A1- 2003 030 368

## Description

### 1. Field of the Invention

The present invention generally relates to a phosphor to be used in display devices such as a CRT, PDP, FED, EL, or vacuum fluorescent display, and lighting units such as an LED and fluorescent lamp, and particularly relates to a phosphor which is suitable for an LED, light source and lighting unit having a light emitting part of ultraviolet, blue or the like, and emitting visible light or white light, as well as to the manufacturing method of such a phosphor, and to a light source and LED employing such phosphor.

### 2. Description of the Related Art

Light sources and lighting units, including LEDs that emit white light, are known to be obtainable by combining a light emitting element that emits a blue color or ultraviolet light and a phosphor having an excitation band in the ultraviolet-blue wavelength range generated from the light emitting element.

As the phosphor to be used in the foregoing LED and the like, Y₂O₂S:Eu, La₂O₂S:Eu, 3.5MgO·0.5MgF₂·GeO₂:Mn, (La, Mn, Sm)₂O₂S·Ga₂O₃:Eu is known as a red phosphor, ZnS:Cu,Al, SrAl₂O₄:Bu, BAM:Eu,Mn is known as a green phosphor, YAG:Ce is known as a yellow phosphor, and BAM:Eu, Sr₅(PO₄)₃Cl:Eu, ZnS:Ag, (Sr,Ca,Ha,Mg)₁₀(PO₄)₆Cl₂:Eu is known as a blue phosphor. And, as a result of combining these phosphors and the light emitting part, alight source or lighting unit including a white or monochromatic LED can be obtained.

As the phosphor for a white LED, oxynitride glass phosphor (c.f. Japanese Patent Laid-Open Publication No. 2001-214162), phosphor having sialon as the matrix (c.f. Japanese Patent Laid-Open Publication No. 2003-336059 and Japanese Patent Laid-Open Publication No. 2003-124527 corresponding to US-A-2003/030368), and phosphor containing nitrogen of silicon nitride or the like (c.f. Translated National Publication of Patent Application No. 2003-515655 and Japanese Patent Laid-Open Publication No. 2003-277746) have been proposed, and lighting systems employing such phosphor have also been proposed.

### SUMMARY OF THE INVENTION

In the foregoing light sources including LEDs that emit visible light or white light obtained by combining a light emitting element that emits a blue color or ultraviolet light and a phosphor having an excitation band in the ultraviolet-blue wavelength range generated from the light emitting element, in order to improve the luminance of the visible light or white light, the improvement of the luminous efficacy of the light emitting part, as well as the improvement of the emission efficiency of phosphor are being strongly sought.

Regarding the phosphor, an example of an LED that it emits white light based on the combination of a light emitting element that emits a blue color or ultraviolet light and phosphor is now explained.

When the phosphor is to be used as a white LED, since the emission efficiency of phosphor will improve the luminance of the overall white LED, a phosphor that efficiently emits light in relation to the emission wavelength of the light emitting element has been sought.

For example, YAG:Ce yellow phosphor has the excitation band having favorable efficiency when the phosphor is excited by the blue light from the light emitting element of the LED, and, although a favorable yellow emission can be obtained, when excited by the ultraviolet light from the light emitting element of the LED, the ultraviolet light from the light emitting element will be outside the excitation range of the phosphor, and high emission cannot be obtained.

Further, with respect to red phosphor, since the existing phosphor has inferior emission efficiency, upon mixing a phosphor of another color, a method of compensating the amount of emission by increasing the compounding ratio of the red color component. Nevertheless, a more efficient phosphor has been sought.

The present invention was devised in view of the foregoing circumstances, and provides a high-efficiency phosphor having an excitation band corresponding to the light in the ultraviolet-visible (300 to 550nm) wavelength range emitted from a light emitting part which emits a blue color or ultraviolet light, the manufacturing method thereof, and a light source employing such a phosphor.

Upon conducting intense study regarding the base composition of various phosphors to overcome the foregoing problems, the present inventors achieved a phosphor having a new base composition of high efficiency and superior in emission characteristics.

The present invention provides a phosphor expressed by a composition formula of MmAaBbNn:Zz, wherein, in said phosphor, element M is at least one or more elements having the valency of II, element A is at least one or more elements having the valency of III, element B is at least one or more elements having the valency of IV, N is nitrogen, element Z is at least one or more activator elements, satisfying m+z=1, a=1, b=1, n=3, wherein the carbon content is less than 0.08% by weight.

The present invention further provides a light source having said phosphor, and a light-emitting part which emits light of a first wavelength;
wherein a part of the light of said first wavelength is made to be an excitation source, and said phosphor is caused to emit light with a wavelength that is different from the first wavelength.

Moreover, the present invention provides an LED having said phosphor, and a light-emitting part which emits light of a first wavelength;
wherein a part of the light of said first wavelength is made to be an excitation source, and said phosphor is caused to emit light with a wavelength that is different from the first wavelength.

The present invention further provides a manufacturing method of the above nitride phosphor, comprising the steps of:
filling the raw material of said nitride phosphor into a firing vessel formed from a boron nitride material; and
firing the raw material in the gas including N₂, or in the gas including noble gas under a pressure of 0.1 MPa or less to manufacture a nitride phosphor.

Preferred embodiments of the present invention are set forth in the sub-claims.

Since the phosphor is expressed by a composition formula of MmAaBbNn:Zz, and where (m + z):a:b:n = 1:1:1:3 has an excitation band corresponding to the ultraviolet-blue (wavelength range300 to 550nm) light emitted from the light emitting element which emits a blue color or ultraviolet light, and is capable of high efficiency emission, a lighting unit such as a monochromatic or white LED or light source having high efficiency and high luminance can be obtained by combining the foregoing phosphors with the light emitting part which emits such ultraviolet-blue light.

When the nitride phosphor is in a powdered state, the application or filling of nitride phosphor can be conducted easily. When the average particle size of the nitride phosphor is 20µm or less and 1µm or more, the emission efficiency can be improved.

The phosphor in embodiments has superior emission characteristics of having high emission intensity and in which the peak wavelength of emission is within the range of 580 to 680nm, and further has excitation band characteristics of a flat and high efficiency excitation band in a broad range of an ultraviolet-visible light wavelength of 300 to 550nm.

Since the carbon content in the nitride phosphor is less than 0.08% by weight, it is possible to suppress the deterioration in the emission intensity of the nitride phosphor since the impurity content of carbon that does not contribute to the emission is small, and improve the emission efficiency of nitride phosphor.

Further, regarding the light source according to the invention, since the phosphor has an excitation band corresponding to the light in the prescribed broad wavelength (300 to 550nm) emitted from the light emitting part, it was possible to obtain a light source having high luminous efficacy which emits visible light or white light by combining such nitride phosphor and light emitting part.

Further, regarding the LED according to the invention since the nitride phosphor has an excitation band corresponding to the light in the prescribed broad wavelength (300 to 550nm) emitted from the light emitting part, it was possible to obtain a light source having high luminous efficacy which emits visible light or white light by combining such nitride phosphor and light emitting part.

Further, according to the manufacturing method of the invention since this comprises the steps of filling the raw material of the nitride phosphor into a firing vessel formed from a boron nitride material, and firing this in the gas including N₂, or in the gas including noble gas it is possible to manufacture a nitride phosphor with a low impurity content of carbon and oxygen. As described above, since it is possible to manufacture a nitride phosphor with few impurities that do not contribute to the emission, the deterioration of emission intensity can be suppressed, and the emission efficiency of nitride phosphor can be improved.

### BRIEF DESCRIPTION OF THE DRAWINGS

Fig. 1 is a diagram showing the powder X-ray diffraction pattern of the primary generated phase of the phosphor according to the present invention, and the comparison of the peak of the X-ray diffraction pattern and JCPDS card;
Fig. 2 is a graph showing the excitation spectrum of the primary generated phase of the phosphor according to the present invention;
Fig. 3 is a graph showing the emission spectrum of the primary generated phase of the phosphor according to the present invention;
Fig. 4-A is a diagram showing the powder X-ray diffraction pattern of the primary generated phase of the phosphor according to Examples 6 to 10 of the present invention;
Fig. 4-B is a diagram showing the powder X-ray diffraction pattern of the primary generated phase of the phosphor according to Examples 6 to 10 of the present invention;
Fig. 4-C is a diagram showing the powder X-ray diffraction pattern of the primary generated phase of the phosphor according to Examples 6 to 10 of the present invention;
Fig. 4-D is a diagram showing the powder X-ray diffraction pattern of the primary generated phase of the phosphor according to Examples 6 to 10 of the present invention;
Fig. 4-E is a diagram showing the powder X-ray diffraction pattern of the primary generated phase of the phosphor according to Examples 6 to 10 of the present invention;
Fig. 4-F is a diagram showing the powder X-ray diffraction pattern of the primary generated phase of the phosphor according to Examples 6 to 10 of the present invention;
Fig. 4-G is a diagram showing the powder X-ray diffraction pattern of the primary generated phase of the phosphor according to Examples 6 to 10 of the present invention;
Fig. 5 is an X-ray diffraction pattern of the conventional phosphor according to a Comparative Example;
Fig. 6 is an X-ray diffraction pattern of the conventional phosphor according to a Comparative Example;
Fig. 7 is a graph of the emission spectrum of the phosphor according to the present invention;
Fig. 8 is a graph of the excitation spectrum of the phosphor according to the present invention;
Fig. 9 is a graph of the composition and emission intensity of the phosphor according to the present invention;
Fig. 10 is a graph of the emission spectrum of the phosphor according to the present invention and conventional technology;
Fig. 11 is a chart showing the material of the firing vessel (crucible) to be used upon manufacturing the phosphor according to the present invention, characteristics of the manufactured phosphor, and the impurity concentration thereof; and
Fig. 12 is a graph showing the relationship of the material of the firing vessel (crucible) for firing and manufacturing CaAlSiN₃ as the phosphor according to the present invention, and the emission intensity of the phosphor.

### DETAILED DESCRIPTION OF THE PREFERRED EMBODIMENTS

### (Structure and Optical Characteristics of the Phosphor According to the Present Invention)

The phosphor according to the present invention is expressed by a composition formula of MmAaBbNn: Zz, and has a four-element matrix structure where (m + z):a:b:n = 1:1:1:3.

Here, element M is at least one or more elements having the valency of II in the phosphor. Element A is at least one or more elements having the valency of III in the phosphor. Element B is at least one or more elements having the valency of IV in the phosphor. N is nitrogen. Element Z is at least one or more activator elements in the phosphor. A phosphor having the foregoing matrix structure possesses a high emission efficiency.

Further, when the matrix structure of the foregoing phosphor takes on a chemically stable structure, this is a favorable constitution since an uneven phase will not be generated easily, and the emission efficiency will not deteriorate. Thus, in order for the matrix structure of phosphor to take on a chemically stable structure, it is preferable that (m + z):a:b:n = 1:1:1:3 when the foregoing phosphor is expressed with a composition formula of MmAaBbNn:Zz. This is because element M has the valency of II, element A has the valency of III, element B has the valency of IV, and the phosphor will be compound with nitrogen having the valency of III and become a stable nitride compound. Nevertheless, a slight variation in the composition may occur.

Here, the metal nitride having the valency of II will normally take on the chemical formula of M₃N₂, the metal nitride having the valency of III will take on the chemical formula of AN, and the metal nitride having the valency of IV will take on the chemical formula of B₃N₄. Thus, in order to mix these to obtain M:A:B = 1:1:1, the respective nitride raw materials should be mixed at a molar ratio of 1:3:1. Provided that, when at least one or more elements having the valency of II as the activator is used as element Z, since a part of element M will be substituted, (m + z):a:b:n = 1:1:1:3.

As a result, a chemically stable structure can be obtained, and a high efficiency, high luminance phosphor can be obtained thereby.

It is preferable that element M is at least one or more elements selected from Be, Mg, Ca, Sr, Ba, Zn, Cd, and Hg. In other words, for instance, element M may be independently Ca, or a mixture of Ca-Mg-and so on.

It is preferable that element A is at least one or more elements selected from B (boron), Al, Ga, In, Tl, Y, Sc, P, As, Sb, and Bi. In other words, for instance, element A may be independently Al or a mixture of Al-Ga-and so on.

It is preferable that element B is at least one or more elements selected from Si, Ge, Sn, Ti, Hf, Mo, W, Cr, Pb, and Zr. In other words, for instance, element B may be independently Si or mixture of Si-Ge-and so on.

It is preferable that element Z is at least one or more elements selected from rare-earth elements or transition metal elements. In otherwords, element Z may be independently Eu or a mixture of Eu-La-and so on.

As a result of foregoing element M, element A, element B and element Z taking on the constitution described above, the emission efficiency of phosphor will be further improved.

With Al as element A and Si as element B, the respective nitrides thereof are commonly used as a heat transfer material or structural material, and are readily available at low costs. In addition, the environmental load is small. Therefore, as a result of selecting these elements as the raw material, this will yield a favorable constitution since an inexpensive and easy-to-use phosphor can be obtained.

As evident from being expressed with the composition formula of MmAaBbNn:Zz where (m + z):a:b:n = 1:1:1:3, the phosphor of the present invention does not contain oxygen in the constituent elements, and is of a different composition system than the conventional phosphor having a sialon base (Si-Al-O-N), or phosphor having a Si-O-N base. According to the research conducted by the present inventors, it has been discovered that, when the oxygen content in the phosphor is significant, the emission efficiency will decrease, and the emission wavelength of phosphor tends to shift toward the short wavelength side. From this perspective, the phosphor according to the present invention that does not contain oxygen in the base constituent elements is of a favorable constitution having a high emission efficiency, and which is capable of avoiding the emission wavelength from shifting to the short wavelength side.

In the phosphor according to the present invention, it is preferable that the value of the molar ratio: z/ (m + z) of the element M and the activator element Z is 0.0001 or more and 0.5 or less. When the molar ratio: z/(m + z) of the element M and the activator element Z is within the foregoing range, it is possible to avoid the deterioration of the emission efficiency due to the concentration quenching caused by the excess content of the activator, as well as avoid the deterioration of the emission efficiency due to the insufficient atoms contributing to the emission caused by the insufficient content of the activator. Depending on the activator element Z to be added, the optimum ratio of z/(m + z) will slightly differ, but favorable emission can be obtained when it is in a more preferable range of 0.0005 or more and 0.1 or less.

When element M of the phosphor of the present invention is at least one or more elements selected from Mg, Ca, Sr, Ba, and Zn, this is a favorable constitution since the rawmaterial can be obtained easily, and the environmental load will be small.

When element Z of the phosphor of the present invention is at least one or more elements selected from Eu, Mn, and Ce, this is a favorable constitution since the emission efficiency of phosphor can be further improved.

When element Z of the phosphor of the present invention is Eu, since the emission wavelength will show a red wavelength, this is a favorable constitution as a red phosphor for a white emission unit having favorable luminous efficacy can be obtained.

When element M is Ca, element A is Al, element B is Si and element Z is Eu in the phosphor of the present invention, this is a favorable constitution since the rawmaterial can be obtained easily, the environmental load will be small, and, since the emission wavelength will show a red wavelength, this is a favorable constitution as a red phosphor for a white emission unit having favorable luminous efficacy can be obtained.

When the phosphor of the present invention is in a powdered state, it is preferable that the average particle size of the powder is 20µm or less. This is because it is considered that the emission of phosphor powder primarily occurs on the particle surface, and, when the average particle diameter exceeds 20µm, the surface area per unit weight of phosphor powder will decrease. Further, according to the examination conducted by the present inventors, the emission efficiency will also deteriorate in a case where the average particle diameter is less than 1µm. The a preferable constitution would be that the average particle size of the phosphor according to the present invention is 20µm or less and 1µm or more.

In addition, when considering a case of using this phosphor powder as the phosphor powder for LEDs, the phosphor powder and resin will be mixed and applied to the LED. Thus, from the perspective of obtaining favorable applicability, it is preferable that the average particle diameter is 20µm or less and 1µm or more.

As a result of combining the phosphor obtained in the present invention and, for example, a light source which emits a blue color or ultraviolet light, a visible light-monochromatic or white, high efficiency light source can be manufactured.

Since the phosphor obtained in the present invention emits light upon receiving light having an excitation range in a broad range of 300 to 550nm, by combining this with a light source that emits a blue color or ultraviolet light, a visible light-monochromatic or white, high efficiency light source can be manufactured.

As a result of combining the phosphor obtained in the present invention and, for example, an LED light emitting part which emits a blue color or ultraviolet light, a visible light-monochromatic or white, high efficiency LED can be manufactured.

Since the phosphor obtained in the present invention emits light upon receiving light having an excitation range in a broad range of 300 to 550nm, by combining this with an LED light emitting part emits a blue color or ultraviolet light, a visible light-monochromatic or white, high efficiency light source can be manufactured.

### (Powder X-Ray Diffraction Pattern of the Phosphor According to the Present Invention)

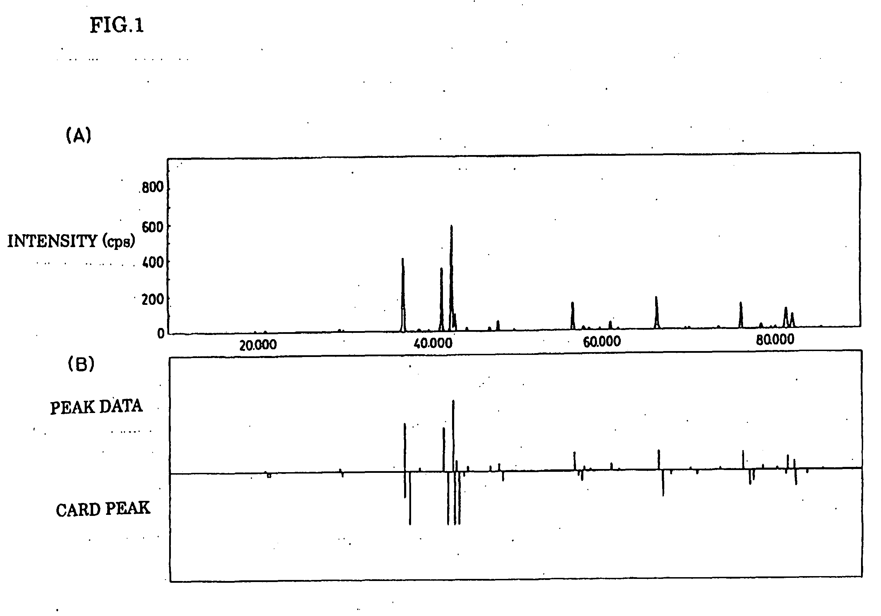

Next, the powder X-ray diffraction pattern of the phosphor according to the present invention is explained with reference to Fig. 1(A) and (B).

Fig. 1(A) is the powder X-ray diffraction pattern of the phosphor pertaining to Example 1 described later, as an example of the phosphor according to the present invention, measured with CoK α radiation and (B) is a comparison result of the peak of the X-ray diffraction pattern and the peak of the JCPDS card. Here, peak data indicated in the upper half of Fig. 1(B) represents the Bragg angle (2θ) and intensity of the primary peak illustrated in (A) with the position and height of the line segment. Next, card peak indicated in the lowerhalf of Fig. 1(B) represents Bragg angle (2θ) and intensity of the primary peak of the CaAlSiN₃(39-0747) crystal described in the JCPDS card with the position and height of the line segment (provided that the peak intensity of the CaAlSiN₃ crystal is shown upside down for the convenience of comparing both peaks).

As evident from the comparison of both peaks depicted in Fig. 1 (B), although the overall pattern of the primary peak of the phosphor according to the present invention and the CaAlSiN₃ crystal described in the JCPDS card are similar, when reviewing this in detail, the peak of the phosphor according to the present invention is shifting toward the direction where the Bragg angle (2θ) is becoming smaller, and, although the two look similar, these can be considered to have crystal structures having different lattice plane spacing. Here, a contributing factor for causing the difference in the crystal structure may be that whereas the CaAlSiN₃(39-0747) crystal described in the JCPDS card is using CaO, AlN and Si₃N₄ as the raw material, the phosphor according to the present invention uses Ca₃N₂, AlN, Si₃N₄ and nitride raw materials for all elements constituting the matrix structure. Thus, there is a difference in the amount of oxygen existing in the crystal structures, and, in the case of the phosphor according to the present invention, a part of Ca is being substituted with Eu. Since the overall pattern of the primary peaks are similar, the generated phase of the phosphor according to the present invention is considered to have an orthorhombic crystal similar to the CaAlSiN₃(39-0747) crystal described in the JCPDS card.

Accordingly, the present inventors considered that the phosphor according to the present invention is similar to the CaAlSiN₃(39-0747) crystal described in the JCPDS card, but possesses a new crystal structure, and decided to prescribed the structure of the phosphor according to the present invention having this new crystal structure with the X-ray diffraction pattern of the phosphor.

Here, the primary peak in the X-ray diffraction pattern of the generated phase contained in the phosphor according to the present invention is explained.

As evident from Fig. 1(A), the generated phase contained in the phosphor according to the present invention, in the Bragg angle (2θ), has a characteristic peak in the range of 36.5° to 37,5°, 40.9° to 41.9°, 41.9° to 42.9°, 56.3° to 57.3°, 66.0° to 67.0°. 75.8° to 76.8°, and 81.0° to 83.0°, and, among the above, the peak in the range of 36.5° to 37.5° and 41.9° to 42.9° is in particular intense with a strong characteristic peak, and the peak in the range of 56.3° to 57.3° is a characteristic peak subsequent thereto. Each of these peaks was, when the relative intensity of the diffraction peak with the strongest intensity in the powder X-ray diffraction is 100%, a diffraction peak having a relative intensity of 10% or more.

Further, when viewing these peaks from the perspective of the half bandwidth of the diffraction pattern, the half bandwidths are all 0.25° or less, and a sharp diffraction peak can be obtained. This sharp diffraction peak shows that the generated phase is not an amorphous structure, but is a structure superior in crystalline properties.

Although the detailed relationship between the foregoing characteristics of the X-ray diffraction pattern of the phosphor according to the present invention and the resulting superior emission characteristics and favorable excitation band characteristics is still unclear, this is generally considered to be based on the following reasons.

Foremost, in the X-ray diffraction pattern, the fact that the peak pattern showing that the target generated phase is obtained in a single phase is considered to be closely related to the phosphor according to the present invention having superior emission characteristics and favorable excitation band characteristics. Here, in the X-ray diffraction pattern, the fact that the peak of the raw materials (Ca₃N₂, AlN, Si₃N₄, Eu₂O₃) used in manufacturing phosphor cannot be seen is considered to be a result of the target generated phase being obtained as a single phase. In other words, during the manufacture of phosphor, when the firing temperature is insufficient, or the feed amount of the raw material is inadequate, residual raw materials other than the target generated phase will exist in the fired phosphor, and the amount of phosphor per unit area to which excitation light is irradiated will decrease, and, since the residual raw materials will absorb the excitation light or emitted light, and emission efficiency of phosphor will deteriorate, and superior emission characteristics cannot be obtained. Therefore, characteristics where the peak of raw materials cannot be seen in the X-ray diffraction pattern are considered to imply that the phosphor to be measured possesses superior emission characteristics and favorable excitation band characteristics.

Secondly, the fact that the intensity of the X-ray diffraction peak is strong is considered to be a reflection of the height of crystalline characteristics of the generated phase. And, since the crystalline characteristics of the generated phase are high, this takes on a structure where the periphery of the Eu²⁺ in the generated phase easily emits light, and superior emission characteristics are obtained by such structure being regularly connected. Contrarily, in a case where the X-ray diffraction peak intensity is weak; that is, when the crystalline characteristics are low, since the regularity of the structure around Eu²⁺ in the center of emission will be insufficient, the distance between Eu²⁺ and Eu²⁺ will become too near, and concentration quenching may occur, or Eu²⁺ may not be found in a site where Eu²⁺ should be found, and superior emission characteristics cannot be obtained as a result thereof.

Finally, the fact that the peak in the vicinity of 38 to 40° in the Bragg angle (2θ) is weak, more preferably where no peak that may appear near the high angle side of the foregoing peak does not exist (provided that these peaks are overlapping and caution is required when deciphering this) is reflecting the phosphor possessing superior emission characteristics and favorable excitation band characteristics. This is considered to be because the peak seen in the vicinity of 38 to 40° in the Bragg angle (2θ) is an overlap of the peak of AlN, which is the raw material of phosphor, and the peak unique to CaAlSiN₃:Eu. In other words, as described above, it has been explained that when the firing temperature is insufficient, or the feed amount of the raw material is inadequate upon manufacturing phosphor, residual raw materials other than the target generated phase will exist in the fired phosphor, and adverse effects will be inflicted to the emission characteristics. In particular, when AlN remains, since this AlN is gray, it will absorb the light emitted from the phosphor sample or the excitation light, and this is considered to be directly related to the deterioration of emission intensity. Therefore, in order to obtain a phosphor having a strong emission intensity, it is preferable that the diffraction peak intensity of AlN near 38 to 40° is weak, and it is preferable that the peak seen near 38 to 40°, where both peaks are overlapping, or the peak of AlN that may appear near the high angle side of the peak unique to CaAlSiN₃:Eu does not exist.

Here, the measurement method of the powder X-ray diffraction pattern of the powder according to the present invention is explained.

The phosphor to be measures was pulverized to have a prescribed average particle diameter (preferably 20µm to 1µm) with a pulverizing means such as a mortar or a ball mill after being fired, filled in a sample holder so that it became flat, and this was measured with an XRD device "RINT 2000" manufactured by Rigaku Corporation. The measured conditions are shown below.

Measuring instrument: "RINT 2000" manufactured by Rigaku Corporation
X-ray tube: CoKa
Tube voltage: 40 kV
Tube current: 30 mA
Scanning method: 2θ/θ
Scanning speed: 0.03°/min
Sampling interval: 0.01°
Start angle (2θ): 10°
Stop angle (2θ): 90°

Further, regarding the shifting of the Bragg angle (2θ), this is considered to be because the surface of the sample to which the X-ray is irradiated is not flat, and the difference in the measurement conditions of the X-ray, particularly the difference in the scanning speed. Thus, it is considered that a slight shift in the range showing the characteristic diffraction peak as shown above can be tolerated. In the present specification, in order to suppress this shifting as much as possible, the Bragg angle (2θ) is sought by making the scanning speed 0.03°/min, mixing Si in the phosphor sample, and correcting the shifting of the Si peak after the X-ray measurement.

### (Manufacturing Method of Phosphor According to the Present Invention)

Here, the manufacturing method of a red phosphor pertaining to the present invention is explained taking the manufacture of a phosphor expressed with the composition formula of CaAlSiN₃:Eu (provided that Eu/(Ca + Eu) = 0.020).

For respective nitride raw materials for element M, element A and element B, commercially available raw materials can be used, but since the higher in purity the better, materials having 2N or more is preferable, or more preferably 3N or more are prepared. As for the particle size of respective raw material particles, finer particles are generally more preferable from the view point of promoting reaction, but the particle sizes and shapes of obtained phosphors are changed according to the particle sizes and shapes of the raw materials. Therefore, it is enough to prepare nitride raw materials having approximate particle sizes fitting to particle sizes required to the phosphor to be obtained finally. As for a raw material for the Z element, it is preferable to use a commercially available nitride raw material or an element metal, but since the amount of addition is small, there is no problem if oxide is used. The purity is preferably higher similarly to other raw materials, and the material having purity of preferably 2N or more, or more preferably 3N or more is prepared.

In the case of producing Ca_{0.980}AlSiN₃:Eu_{0.020}, it is advisable to prepare, for instance, for the nitrides of element M, element A and element B, Ca₃N₂ (2N), AlN (3N), and Si₃N₄ (3N), respectively, and for element Z, Eu₂O₃ (3N). Then 0.980/3 mol of Ca₃N₂, 1 mol of AlN, 1/3 mol of Si₃N₄, and 0.020/2 mol of Eu₂O₃ are weighed respectively and mixed so that mol ratio of the respective elements is to be Ca : Al : Si : Eu = 0.980 : 1 : 1:0.020. It is convenient for weighing and mixing to perform in a glove box under inert gas atmosphere since Ca₃N₂ is susceptive to be oxidized. Since nitrides for the respective raw material elements are easily affected by moisture, it is recommended to use inert gas from which moisture is completely removed. It does not matter whether a wet type or a dry type to be used for the mixing, but if pure water is used as a solvent for wet mixing, the raw materials are decomposed. Therefore, an adequate organic solvent is required to be selected. As for a manufacturing apparatus, an ordinary ball mill and a mortar and the like can be used

The mixed raw materials are put into a crucible and are kept firing in an inert gas atmosphere such as nitrogen or the like at 1000°C or higher, preferably at 1200°C or higher, more preferably at 1500°C or higher and 1700°C or lower, for 30 min or longer, even more preferably for 3 hours. Since a higher firing temperature makes the firing faster, the retention time can be reduced. On the other hand, even in the case of a low firing temperature, it is possible to obtain a targeted emission characteristic by keeping the temperature for a long time. However, since the longer the firing time, the more particle-growth progresses, and the particle size gets large, it is necessary to set the firing time according to targeted particle size. The pressure during the firing under an inert atmosphere is preferably 0.5MPa or less, and preferably 0.1MPa or less. When firing is performed at a pressure that is any greater, sintering between the particles will progress excessively, and this is not preferable during the pulverization after firing.

As for a crucible, a high purity crucible without any impurities capable of being used in an inert atmosphere such as an Al₂O₃ crucible, a Si₃N₄ crucible, an AlN crucible, a sialon crucible, a C (carbon) crucible, a BN (boron nitride) crucible and the like can be used, and it is preferable to use a BN crucible because the BN crucible can avoid entering impurities from a crucible.

After completion of the firing, the fired product is taken out from the crucible, and phosphor shown by a composition formula of Ca_{0.980}AlSiN₃:Eu_{0.020} can be manufactured by grinding the fired product using a grinding means such as a mortar, ball mill or the like to be a predetermined average particle size. Here, when Eu₂O₃ is used as a raw material for Eu, oxygen is allowed to enter into the fired product though the amount of oxygen is small so that the composition formula is changed to Ca_{0.980}AlSiO_{0.03}N_{2.96:}Eu_{0.020}., but the amount of oxygen is so small that it causes no problem. When further reduction of oxygen is necessary, Eu metal or Eu nitride can be used as an Eu material

### (Reduction of Impurities During Manufacture of Phosphor According to the Present Invention)

With the phosphor according to the present invention, the carbon content is less than 0.08% by weight, and the oxygen content may be less than 3.0% by weight.

When the phosphor has an impurity carbon content of less than 0.08% by weight and an impurity oxygen content of less than 3.0% by weight, when expressing the emission intensity with relative intensity, the deterioration of emission intensity of roughly 25 to 30% can be suppressed and the emission efficiency can be improved thereby.

The manufacturing method of phosphor with reduced impurities pertaining to the present invention comprises the steps of filling the raw material of the nitride phosphor into a firing vessel formed from a boron nitride material, and firing this under an inert atmosphere such as N₂ and noble gas. The manufacturing method of phosphor with reduced impurities is now explained taking an example of manufacturing CaAlSiN₃:Eu (provided that Eu/(Ca + Eu) molar ratio = 0.015) as the phosphor.

Foremost, as the nitrides of Ca, Al and Si to become the raw material, Ca₃N₂(2N), AlN(3N), and Si₃N₄(3N) are prepared. As the Eu raw material, Eu₂O₃(3N) is prepared.

These raw materials are weighed and mixed such that the molar ratio of the respective elements will become Ca:Al:Si:Eu = 0.985:1:1:0.015 ((Ca+Eu):Al:Si: = 1:1:1). The mixing may be conducted with an ordinary mixing method employing a mortar or the like, but it is convenient to operate this in a glove box under an inert atmosphere such as nitrogen.

The reason for operating this mixing in a glove box under an inert atmosphere is because, if this operation is conducted in the atmosphere, the ratio of the oxygen concentration contained in the matrix structure element will collapse due to the oxidation and decomposition of the raw material, the emission characteristics may deteriorate, and the targeted composition of phosphor will be lost. Further, since the nitrides of the respective raw material elements are easily affected by moisture, it is preferable to use inert gas in which moisture has been sufficiently removed therefrom. When using nitride raw materials as the respective raw material elements, dry mixing is preferably used as the mixing method for avoiding the decomposition of the raw material, and this may be pursuant to an ordinary dry mixing method employing a ball mill or mortar.

The mixed raw material powder is filled in a boron nitride crucible as the firing vessel, and, for example, is heated under an inert atmosphere such as a nitrogen atmosphere having a pressure of 0.05MP to 1500° C at a temperature rising speed of 15°C/min., and retained and fired at 1500°C for 3 hours.

Here, the present inventors discovered that, when using a carbon firing vessel as the firing vessel (e.g. crucible) for sintering the raw materials of phosphor, carbon as an impurity would get mixed in the phosphor to be fired with the carbon firing vessel, and the emission intensity of phosphor may deteriorate. According to the research conducted by the present inventors, the present inventors discovered that when the amount of carbon contained in the phosphor is 0.08% or more by weight, the emission intensity of phosphor begins to deteriorate. Further, the present invention discovered that, when using an alumina firing vessel as the firing vessel for sintering the raw materials of phosphor, oxygen as an impurity would get mixed in the phosphor to be fired with the alumina firing vessel, and the emission intensity of phosphor may deteriorate. According to the research conducted by the present inventors, the present inventors discovered that when the amount of oxygen contained in the phosphor is 3.0% or more by weight, the emission intensity of phosphor begins to deteriorate.

And, the present inventors discovered that, by sintering and manufacturing phosphor with a boron nitride firing vessel, it is possible to manufacture a phosphor having a low impurity carbon content and low impurity oxygen contents that do not contribute to emission, capable of suppressing the deterioration of emission intensity, and improving the emission efficiency of the phosphor.

Even when the set value of the Eu/ (Ca + Eu) molar ratio fluctuates, by matching the blending quantity upon the feed of the respective raw materials with a prescribed composition formula, a phosphor having a prescribed composition can be manufactured with the same manufacturing method. The obtained phosphors all had a carbon content of less than 0.08% by weight and an oxygen content of less than 3.0% by weight.

Although the phosphor according to the present invention is in a powdered state in consideration of the ease of application or filling, in such a case, it is preferable that the average particle diameter of the phosphor powder is 20µm or less. This is because it is considered that the emission of phosphor powder primarily occurs on the particle surface, and, when the average particle diameter is no more than 20µm, the surface area per unit weight of phosphor powder will decrease. Further, in a case of making the powder into a paste and apply this to the likes of a light emitting element, the density of the powder can be improved, and the deterioration of luminance can also be avoided from this perspective. Further, according to the research conducted by the present inventors, although the details are uncertain, from the perspective of the emission efficiency of the phosphor powder, it has been discovered that it is preferable that the average particle diameter is 1µm or greater. As described above, the average particle diameter of the phosphor according to the present invention is preferably 1µm or more and 20µm or less.

By combining the phosphor according to the present invention in a powdered state with a light emitting part (in particular, a light emitting part which emits light in an emission wavelength range of 300 to 550nm) with a publicly known method, the phosphor according to the present invention has the excitation band corresponding to the light of wide wavelength range emitted from the emitting part, and emits by receiving the light from the emitting part, and it is therefore possible to obtain a light source with high luminous efficacy that emits visible light or white light. In particular, by combining an LED that emits light in an emission wavelength range of 300 to 550nm as the light emitting part with a publicly known method, it is therefore possible to obtain a light source or LED with high luminous efficacy that emits visible light or white light.

Thus, this light source (LED) may be employed as a variety of light sources for display devices or illuminating systems such as fluorescent lighting.

### [Examples]

The present invention is now explained in further detail with reference to the Examples.

### (Example 1)

Commercially available Ca₃N₂(2N), AlN(3N), Si₃N₄(3N), Eu₂O₃(3N) were prepared, the respective raw materials were weighed such that the molar ratio of the respective elements would become Ca:Al:Si:Eu = 0.985:1:1:0.015, and mixed in a glove box under a nitrogen atmosphere with a mortar. The mixed raw material powder was heated under a nitrogen atmosphere having a pressure of 0.05MPa to 1500°C at a temperature rising speed of 15°C/min., and retained and fired at 1500° C for 3 hours, and cooled from 1500° C to 200° C for 1 hour to obtain a phosphor having a composition formula of Ca_{0.985}SiAlN₃:Eu_{0.015}. The analysis of the obtained phosphor powder is shown in Table 1. was The average particle diameter (D50) of the obtained phosphor was 4.65µm, the specific surface areawas 1.13m²/g, and 2.2% of oxygen was contained as impurities.

| | Ca(%) | Al(%) | Si(%) | N(%) | Eu(%) | O(%) | OTHERS | AVERAGE PARTICLE DIAMETER (D50) | SPECIFIC SURFACE AREA |
|---|---|---|---|---|---|---|---|---|---|
| Ca_{0.825}AlSiN₃:Eu_{0.015} | 27.3 | 20.5 | 19.2 | 29.2 | 1.46 | 2.2 | 0.1 | 4.65 µm | 1.13 m²/g |

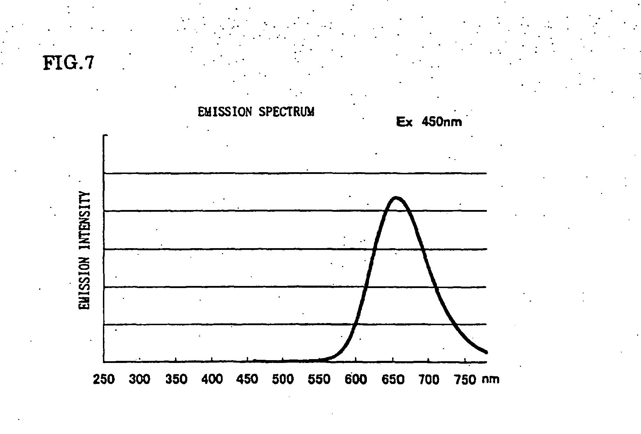

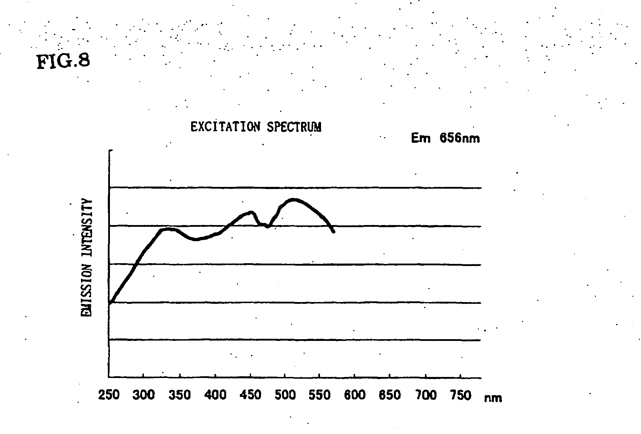

Next, the emission spectrum and excitation spectrum of the phosphor according to the present invention were measured. The measurement result is explained with reference to Fig. 7 and Fig. 8. Here, both in Fig. 7 and Fig. 8, the ordinate axis represents the emission intensity of the phosphor according to the present invention, and the abscissa axis represents the optical wavelength.

Foremost, Fig. 7 is used to explain the emission spectrum of the phosphor according to the present invention. An emission spectrum is the spectrum discharged from the object upon irradiating light or energy of a certain wavelength to the object, and Fig. 7 shows the wavelength spectrum emitted from the phosphor upon irradiating 450nm monochromatic light to the phosphor according to the present invention.

As evident from Fig. 7, this phosphor emits light at a broad wavelength of 550nm to 800nm, and emits the brightest light at 656nm. Incidentally, a red luminescent color was visually confirmed.

Next, the excitation spectrum of the phosphor according to the present invention is explained with reference to Fig. 8. An excitation spectrum is a result of exciting the phosphor to be measured with a monochromatic light of various wavelengths, measuring the emission intensity of a fixed wavelength emitted by the phosphor, and measuring the excitation wavelength dependency of the emission intensity thereof. In this measurement, monochromatic light of 250nm to 570nm was irradiated to the phosphor of the present invention, and the excitation dependency of the emission intensity of the phosphor at a wavelength of 656nm was measured.

As evident from Fig. 8, the excitation spectrum of phosphor is broad from near 300nm to 600nm, and it has been confirmed that the phosphor emits red light by being excited by the light in the wide wavelength range from 300nm to 600nm.

### (Example 2)

In Example 2, the emission intensity based on the concentration of the activator element Z was measured employing the phosphor pertaining to the present invention having the composition formula of CaₘSiAlN₃:Eu_{z}.

In the manufacture of the sample to be measured, the additive amount of Ca and Eu was adjusted such that the concentration of the activator Eu would become m + z = 1 in the relationship with Ca.

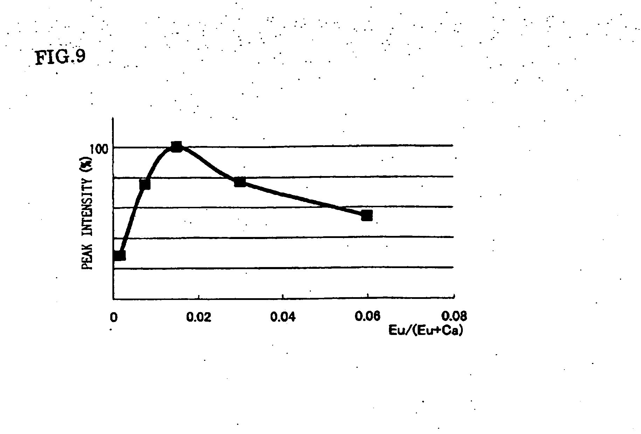

The measurement result is explained with reference to Fig. 9. Here, in Fig. 9, the ordinate axis represents the emission intensity of the phosphor according to the present invention, and the abscissa axis represents the value of the compounding ratio Eu/(Eu + Ca) of Ca and Eu. Incidentally, in the emission intensity, the emission intensity when Eu/ (Eu + Ca) = 0.015 is 100%. And, the results upon adjusting the value of Eu/(Eu + Ca) to become 0.0015 to 0.06 are shown. Incidentally, light having a wavelength of 450nm was used for the excitation.

As evident from the results of Fig. 9, although the emission intensity initially rises together with the increase in the value of Eu/ (Eu + Ca), the emission intensity decreases with the peak near 0.015. This is considered to be because the activator element is insufficient in portions less than 0.015, and concentration quenching caused by the activator element in portions more than 0.015.

Incidentally, in parallel with the measurement of this emission intensity, the chromaticity (X.Y) of emission was also measured. The results are shown in Table 2. As evident from the result of Table 2, it has been confirmed that the peak wavelength shifts toward the long wavelength side together with the increase in the value of Eu/(Eu + Ca).

**[Table 2]**

| | | | | | |
|---|---|---|---|---|---|
| Ex: 450nm | | | | | |

| | Eu CONCENTRATION | PEAK INTENSITY | PEAK WAVELENGTH | x | y |
|---|---|---|---|---|---|
| Ca_{0.9975}AlSiN₃: Eu_{0.0015} | 0.0015 | 28.8% | 632.7 | 0.608 | 0.384 |
| Ca_{0.9925}AlSiN₃: Eu_{0.0075} | 0.0075 | 75.5% | 644.3 | 0.651 | 0.346 |
| Ca_{0.985} AlSiN₃: Eu_{0.015} | 0.0150 | 100.0% | 651.3 | 0.671 | 0.327 |
| Ca_{0.87} AlSiN₃: Eu_{0.03} | 0.0300 | 77.0% | 660.0 | 0.883 | 0.315 |
| Ca_{0.94} AlSiN₃: Eu_{0.05} | 0.0600 | 54.1% | 670.2 | 0.691 | 0.308 |

### (Example 3)

As the light emitting part, a nitride semiconductor LED that emits ultraviolet light having a wavelength of 405nm was prepared, the phosphor obtained in the present invention, commercially available blue phosphor (BAM: Eu) and green phosphor (ZnS:Cu.Al) mixed in a prescribed amount were applied on the LED, and the ultraviolet LED was emitted. Then, the respective phosphors emitted light by being excited by the light emitted from the LED as the excitation source, and an LED that appears white by mixing of the emission from the respective phosphors could be obtained. Moreover, LEDs of various color tones were obtained by changing the mixture ratio of the respective phosphors.

Further, as the light emitting part, a nitride semiconductor LED that emits blue, the phosphor obtained in the present invention and commercially available yellow phosphor (YAG:Ce) were applied on the LED, and the blue LED was emitted. Then, the respective phosphors emitted light by being excited by the light emitted from the LED, and a visually reddish LED having a low color temperature could be obtained.

### (Example 4)

In Example 4, the phosphor of the present invention and the Ca₂Si₅N₈:Eu phosphor described in Translated National Publication of Patent Application No. 2003-515655 and Japanese Patent Laid-Open Publication No. 2003-277746 were compared.

Incidentally, the Ca₂Si₅N₈:Eu phosphor used in this Example was prepared by preparing a 2N or 3N Ca₃N₂, Si₃N₄, Eu₂O₃ as the raw material, weighing Ca, Si and Eu to achieve a molar ratio of 1.97: 5:0. 03, and mixed in a mortar in a glove box under a nitrogen atmosphere. Then, the mixed raw material powder was fired under a nitrogen atmosphere having a pressure of 0.05MPa at 1500° C for 3 hours, and subject to cooling and pulverization as with Example 1 so as to manufacture a phosphor having a composition formula of Ca_{1.97}Si₅N₈:Eu_{0.03}.

The analysis of the phosphor according to the present invention having the composition formula of Ca_{0.985}SiAlN₃:Eu_{0.015} manufactured in Example 1 and the phosphor having the composition formula of Ca_{1.97}Si₅N₈:Eu_{0.03} is described in parallel in Table 3.

As evident from the results of Table 3, the content of oxygen and other elements contained as impurities in both manufactured phosphors were roughly the same, and the specific surface area of both phosphors was also roughly the same.

| | Ca(%) | Al(%) | Si(%) | N(%) | Eu(%) | O(%) | OTHERS | AVERAGE PARTICLE DIAMETER (D50) | SPECIFIC SURFACE AREA |
|---|---|---|---|---|---|---|---|---|---|
| Ca_{0.985}AlSiN₃:Eu_{0.015} | 27.3 | 20.5 | 19.2 | 29.2 | 1.46 | 2.2 | 0.1 | 4.65 µm | 1.13 m²/g |
| Ca_{1.97}Si₅N₈:Eu_{0.03} | 22.3 | 0.3 | 39.6 | 34.2 | 1.34 | 2.1 | 0.2 | 4.77 µm | 1.11 m²/g |

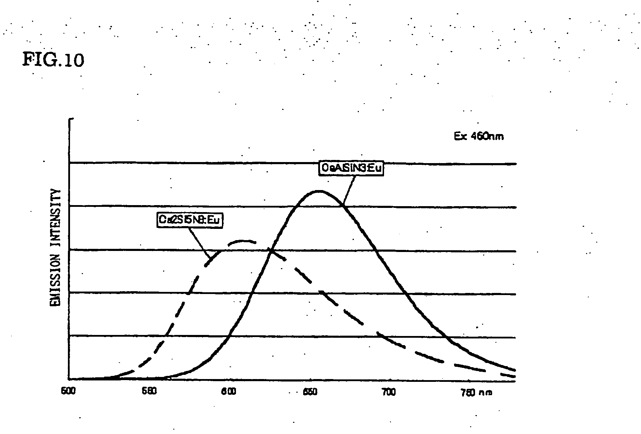

Next, the emission spectrum of both phosphors was compared with the same measurement method as Example 1. However, the irradiated light was monochromatic light of 460nm. The results are shown in Fig. 10 and Table 4.

Fig. 10 is a graph similar to Fig. 7, and the emission spectrum of the phosphor according to the present invention is shown with a solid line, and the emission spectrum of the phosphor having the composition formula of Ca_{1.97}Si₅N₈:Eu_{0.03} is shown with a dotted line.

**[Table 4]**

| | EXCITATION WAVELENGTH | PEAK INTENSITY | PEAK WAVELENGTH | CHROMATICITY | |
|---|---|---|---|---|---|
| | | | | x | y |
| CA_{0.985}AlSiN₃: Eu_{0.015} | 460nm | 137.4% | 656.2 | 0.671 | 0.327 |
| Ca_{1.97}Si₅N₈: Eu_{0.03} | 460nm | 100.0% | 609.2 | 0.593 | 0.405 |

As evident from the results of Fig. 10 and Table 4, it has been discovered that with the phosphor pertaining to the present invention, in comparison to the phosphor having the composition formula of Ca_{1.97}Si₅N₈:Eu_{0.03}, the peak intensity is roughly 40% higher, and is an extremely highly efficient phosphor. More advantageously, whereas the phosphor having the composition formula of Ca_{1.97}Si₅Nₐ:Eu_{0.03} has a peak wavelength near 610nm and is visually an orange color, the phosphor of the present invention has a peak wavelength near 656nm, and is a redder color. Therefore, when manufacturing a LED that emits white light by combining this with other phosphors, the compounding ratio of red phosphor can be reduced.

### (Example 5)

Commercially available Ca₃N₂(2N), AlN(3N), Si₃N₄(3N), Eu₂O₃(3N) were prepared, the respective raw materials were weighed such that Ca₃N₂ became 0.985/3mol, AlN became 1mol, Si₃N₄ became 1/3mol, and Eu₂O₃ became 0.015/2mol, and mixed in a glove box under a nitrogen atmosphere with a mortar. The mixed raw material powder was placed in a crucible, retained and fired under a nitrogen atmosphere having a pressure of 0.05MP at 1600° C for 3 hours, and cooled from 1600° C to 200° C for 1 hour to obtain a phosphor containing a generated phase expressed with the composition of Ca_{0.985}AlSiO_{0.023}N_{2.985}:Eu_{0.0150}. The particle size of the obtained phosphor sample was 3 to 4µm (the particle size of the phosphor subsequently obtained in Examples 6 to 10 was also 3 to 4µm).

The emission characteristics were measured by irradiating the excitation light source having a wavelength of 460nm to the obtained phosphor. The emission intensity is a standardization of the emission intensity of the phosphor pertaining to Example 6 described later as 100%, and the luminance is a standardization of the luminance of the phosphor pertaining to Example 6 described later as 100% based on the calculation method in the XYZ color system prescribed in JISZ8701, and the chromaticity is the chromaticity x, y sought with the calculation method prescribed in JISZ8701. Further, the oxygen/nitrogen concentration (O/N) contained in the sample of phosphor particles is a value measured with an oxygen/nitrogen simultaneous analyzing device (TC-436) manufactured by LECO, and the concentration of other elements is the value measured with ICP.

The raw material composition formula of the phosphor, concentration analysis results of the respective elements, and the measurement result of the emission characteristics are shown in Table 5.

Next, the powder X-ray diffraction pattern of the phosphor sample and the comparison result with the peak of the JCPDS card are shown in Fig. 1(A) and (B).

As explained in the embodiments with reference to Fig. 1(A) and (B), with the crystal structure of the phosphor pertaining to Example 5, the overall pattern of the primary peak of the CaAlSiN₃(39-0747) crystal described in the JCPDS card and the X-ray diffraction pattern are similar. Nevertheless, based on the difference in the amount of oxygen contained in the crystal structures, and the fact that a part of Ca is being substituted with Eu, the two have crystal structures with different crystal face spacing. Thus, the generated phase of the phosphor according to the present invention is considered to have an orthorhombic crystal similar to the CaAlSiN₃(39-0747) crystal described in the JCPDS card.

And, the primary peak in the X-ray diffraction pattern of the generated phase of the phosphor pertaining to Example 5, as explained in the embodiments, in the Bragg angle (2θ), has a characteristic peak in the range of 36.5° to 37.5°, 40.9° to 41.9°, 41.9° to 42.9°, 56.3° to 57.3°, 66.0° to 67.0°, 75.8° to 76.8°, and 81.0° to 83.0°, and, among the above, the peak in the range of 36.5° to 37.5° and 41.9° to 42.9° is in particular intense with a strong characteristic peak, and the peak in the range of 56.3° to 57.3° is a characteristic peak subsequent thereto. Each of these peaks was, when the relative intensity of the diffraction peak with the strongest intensity in the powder X-ray diffraction pattern is 100%, a diffraction peak having a relative intensity of 10% or more.

Further, when viewing these peaks from the perspective of the half bandwidth of the diffraction pattern, the half bandwidths are all 0.25° or less, and a sharp diffraction peak can be obtained. This sharp diffraction peak shows that the generated phase is not an amorphous structure, but is a structure superior in crystalline properties.

Based on the measurement result of the oxygen/nitrogen concentration in the generated phase, the analysis value of the oxygen concentration and nitrogen concentration in the phosphor sample was 2.4wt% and 28.5wt%, respectively. Meanwhile, the oxygen concentration and nitrogen concentration calculated from the raw material feed amount of the phosphor sample were 0.3wt% and 30wt%, respectively.

Upon comparing the two, regarding the oxygen concentration, a large quantity of oxygen is contained in the sample in relation to the 0.3% oxygen concentration in the generated phase. The surplus oxygen of roughly 2wt% is considered to be the oxygen adhered to the surface of the raw material from the beginning, oxygen that was mixed in as a result of the surface of the raw material becoming oxidized during the preparation of firing or during firing, and oxygen adsorped to the phosphor sample surface after firing, and is considered to be oxygen existing separately from the generated phase structure.

Meanwhile, regarding the nitrogen concentration, roughly the same amount of nitrogen (30wt%) is contained in the sample in relation to the 28.5% nitrogen concentration in the generated phase. Based on this result, it is considered that there is hardly any nitrogen existing separately from the generated phase structure.

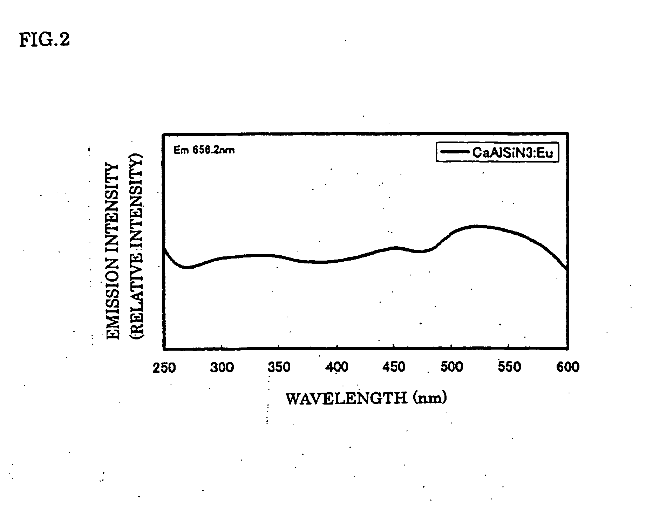

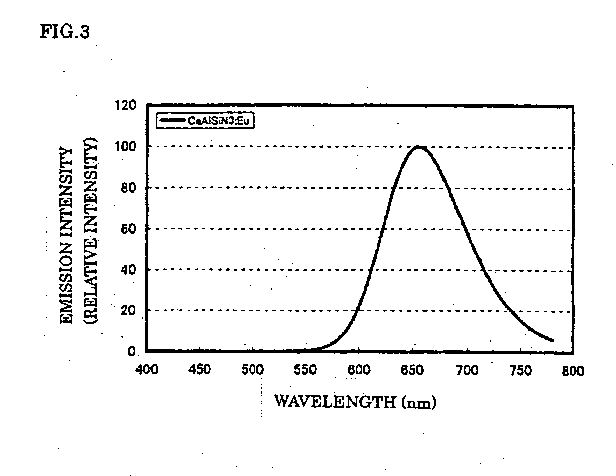

Further, the excitation spectrum showing the excitation band of the obtained phosphor sample, and the emission spectrum showing the emission characteristics were measured, and the results thereof are shown in Fig. 2 and Fig. 3.

Fig. 2 is a diagram in which the ordinate axis represents the relative intensity, and the abscissa axis represents the excitation wavelength (nm), and plotting with a solid line the excitation spectrum measured in relation to the excitation wavelength having a wavelength of 656.2nm.

As evident from the measurement result of Fig. 2, the excitation spectrum of the phosphor sample pertaining to Example 5 exists across a broad range of 250nm to 600nm, and it has been discovered that light in a broad range from ultraviolet light to visible light having a wavelength of 300nm to 550nm can be used sufficiently in an effective manner.

Fig. 3 is a diagram in which the ordinate axis represents the relative intensity, and the abscissa axis represents the emission wavelength (nm), and plotting with a solid line the emission spectrum measured in relation to the excitation light having a wavelength of 460nm.

As evident from the measurement result of Fig. 3, it has been discovered that the emission spectrum of the phosphor sample pertaining to Example 5 has a peak value of 654nm and a broad half bandwidth.

### (Example 6)

Other than placing the mixed raw material in a crucible, retaining and firing this under a nitrogen atmosphere at 1500° C for 3 hours, cooling this from 1500° C to 200° C for 1 hour to obtain a phosphor containing a generated phase expressed with the composition of Ca_{0.985}AlSiO_{0.023}N_{2.985}:Eu_{0.0150}, the phosphor pertaining to Example 6 was obtained as with Example 5.

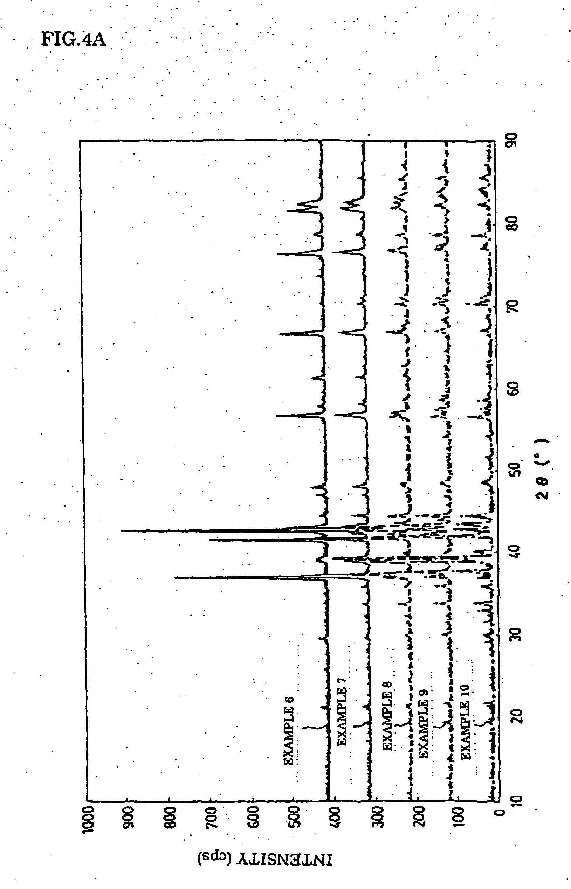

The composition formula derived from the raw material feed and oxygen/nitrogen concentration of the phosphor sample and the measurement result of the emission characteristics are shown in Table 5, and the powder X-ray diffraction pattern of the obtained phosphor is shown with the thick solid line of Fig. 4-A to G.

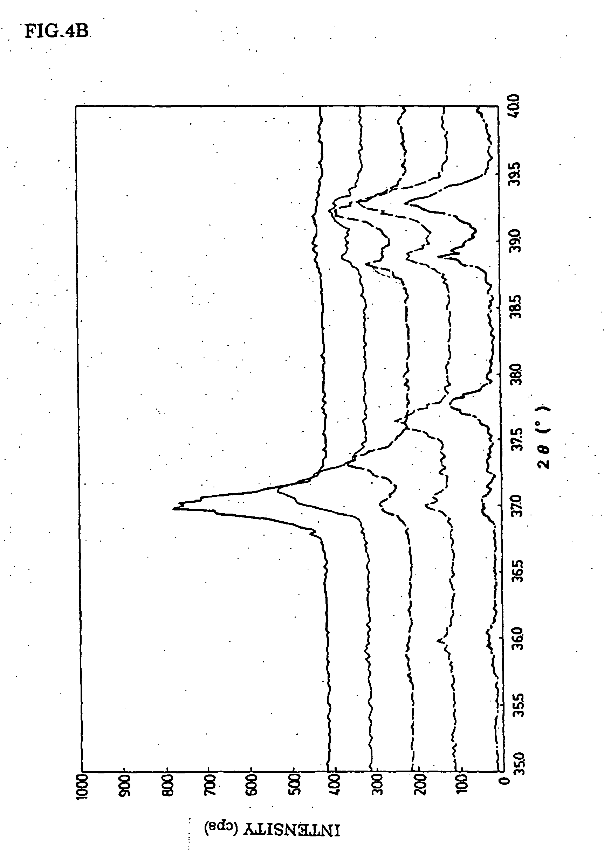

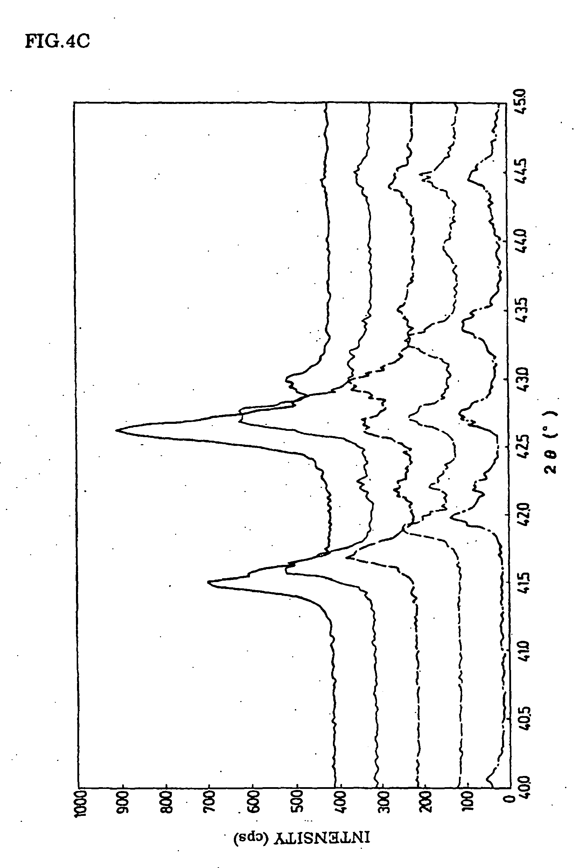

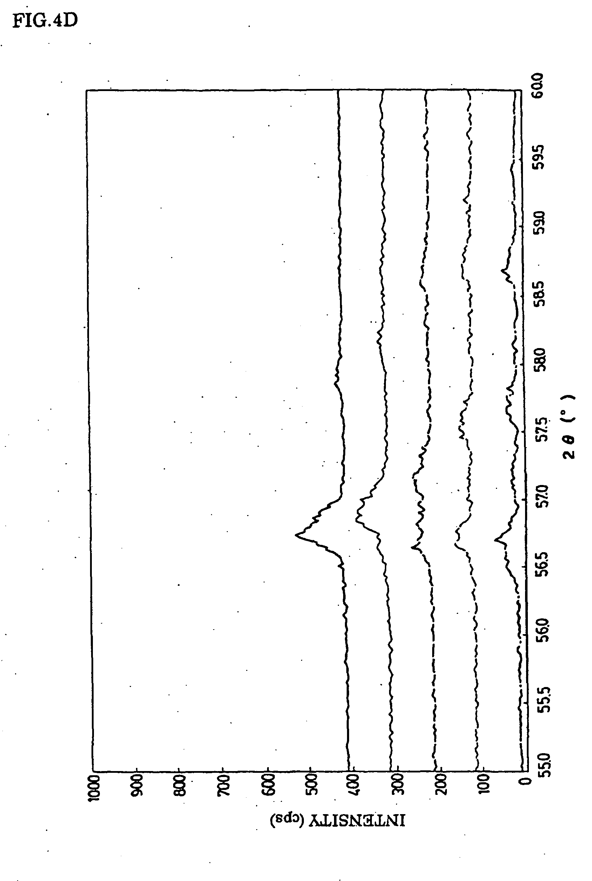

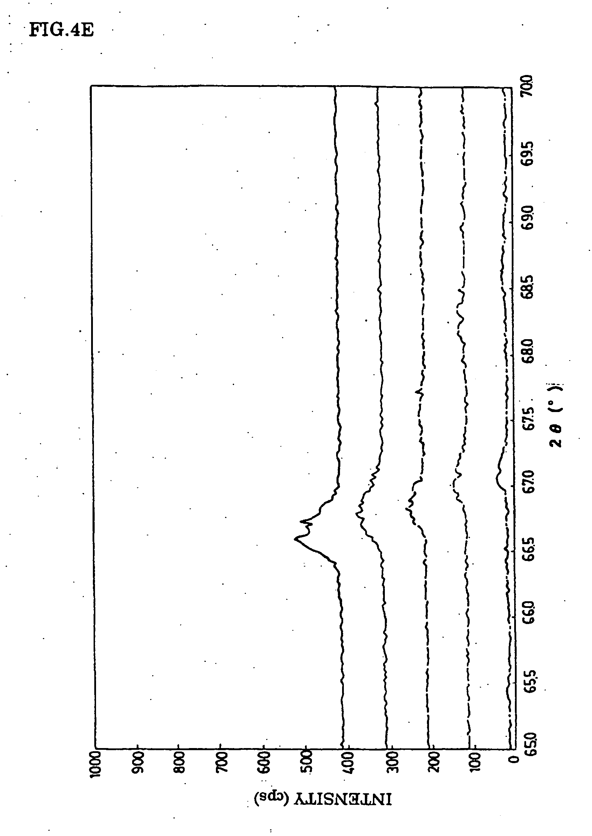

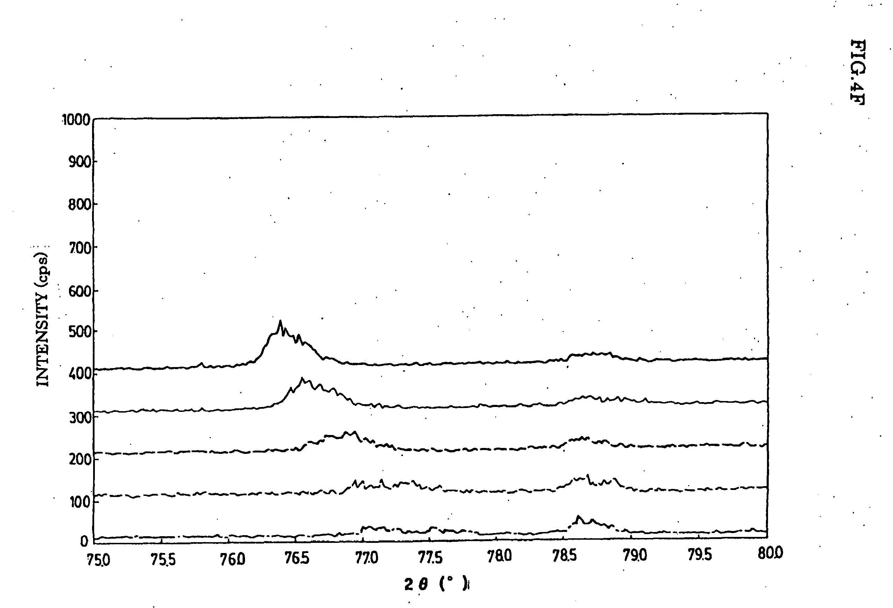

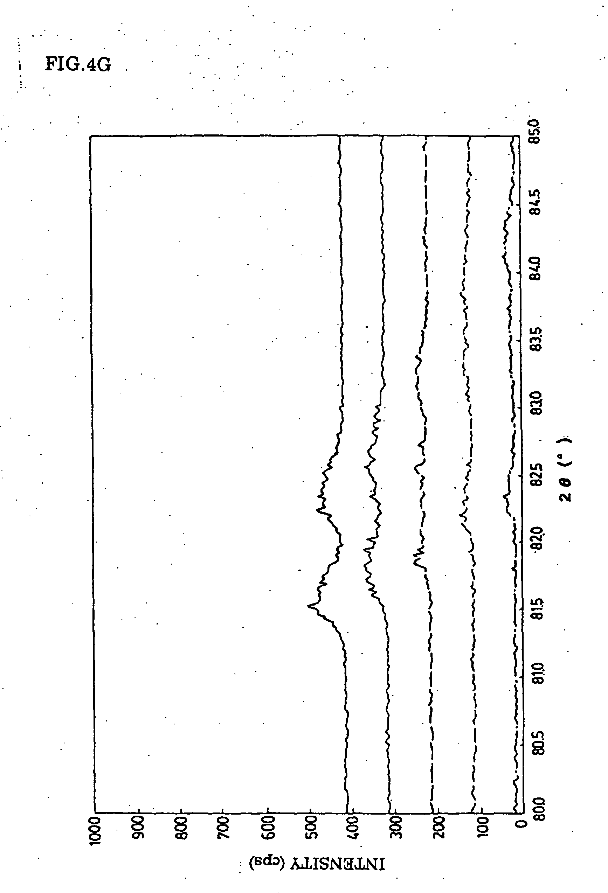

Fig. 4-A shows the X-ray diffraction pattern where the Bragg angle (2θ) extends across the entire range of 0° to 90°, and Fig.4-B to G are enlarged views of the characteristic portions of the Bragg angle. Incidentally, Fig. 4-B is in the range of 35° to 40°, Fig. 4-C is in the range of 40° to 45°, Fig. 4-D is in the range of 55° to 60°, Fig. 4-E is in the range of 65° to 70°, Fig. 4-F is in the range of 75° to 80°, and Fig. 4-G is in the range of 80° to 85°. Further, for the convenience of explanation, the ordinate axis of the powder X-ray diffraction pattern in Examples 6 to 10 is described by mutually being shifted 100ops in Fig. 4-A to G.

### (Example 7)

In the mixing ratio of the respective raw materials, other than using Ca₃N₂ (0.985-0.25)/3mol, and using CaO 0.25mol as Ca raw material, a phosphor sample was manufactured as with Example 6 to measure the emission characteristics. The composition formula derived from the raw material feed and oxygen/nitrogen concentration of the phosphor sample and the measurement result of the emission characteristics are shown in Table 5, and the powder X-ray diffraction pattern of the obtained phosphor is shown with the thin solid line of Fig. 4-A to G.

### (Example 8)

In the mixing ratio of the respective raw materials, other than using Ca₃N₂ (0.985-0.50)/3mol, and using CaO 0.50mol as Ca raw material, a phosphor sample was manufactured as with Example 6 to measure the emission characteristics. The composition formula derived from the raw material feed and oxygen/nitrogen concentration of the phosphor sample and the measurement result of the emission characteristics are shown in Table 5, and the powder X-ray diffraction pattern of the obtained phosphor is shown with the thick dotted line of Fig. 4-A to G.

### (Example 9)

In the mixing ratio of the respective raw materials, other than using Ca₃N₂ (0.985-0.75)/3mol, and using CaO 0.75mol as Ca raw material, a phosphor sample was manufactured as with Example 6 to measure the emission characteristics. The composition formula derived from the raw material feed and oxygen/nitrogen concentration of the phosphor sample and the measurement result of the emission characteristics are shown in Table 5, and the powder X-ray diffraction pattern of the obtained phosphor is shown with the thin dotted line of Fig. 4-A to G.

### (Example 10)

In the mixing ratio of the respective raw materials, other than using CaO 0.985mol as Ca raw material, a phosphor sample was manufactured as with Example 6, and the emission characteristics were measured as with Example 5. The composition formula derived from the raw material feed and oxygen/nitrogen concentration of the phosphor sample and the measurement result of the emission characteristics are shown in Table 5, and the powder X-ray diffraction pattern of the obtained phosphor is shown with the thick dashed line of Fig. 4-A to G.

**[Table 5]**

| | MATERIAL MIXING COMPOSITION FORMULA | OXYGEN NITROGEN CONCENTRATION | | PEAK WAVELENTGH (nm) | EMISSION INTENSITY (%) | CHROMATICITY | | LUMINANCE (%) |
|---|---|---|---|---|---|---|---|---|
| | | O (wt%) | N( wt%) | | | x | y | |
| EXAMPLE 5 | Ca_{0.985}AlSiO_{0.023}N_{2.985}:Eu_{0.0150} | 2.2 | 27.5 | 656.2 | 115.0 | 0.679 | 0.320 | 104.8 |
| EXAMPLE 6 | Ca_{0.985}AlSiO_{0.023}N_{2.985}:Eu_{0.0150} | 2.4 | 28.5 | 654.0 | 100.0 | 0.675 | 0.324 | 100.0 |
| EXAMPLE 7 | Ca_{0.985}AlSiO_{0.273}N_{2.818}:Eu_{0.0150} | 5.2 | 25.1 | 646.1 | 69.7 | 0.649 | 0.350 | 102.6 |
| EXAMPLE 8 | Ca_{0.985}AlSiO_{0.523}N_{2.985}:Eu_{0.0150} | 7.3 | 21.1 | 637.5 | 40.7 | 0.599 | 0.398 | 105.1 |
| EXAMPLE 9 | Ca_{0.985}AlSiO_{0.773}N_{2.485}:Eu_{0.0150} | 9.0 | 21.0 | 624.5 | 30.8 | 0.571 | 0.426 | 102.0 |
| EXAMPLE 10 | Ca_{0.985}AlSiO_{1.008}N_{2.328}:Eu_{0.0150} | 11.3 | 20.7 | 611.0 | 22.4 | 0.540 | 0.451 | 98.4 |

### (1) Oxygen/Nitrogen Concentration in Phosphor

Since the mixing ratio of the Ca₃N₂ and CaO in the raw material is changed and the amount of oxygen feed is increased from Example 6 to Example 10, the analysis value of the oxygen concentration in the phosphor is also increasing. Further, the oxygen concentration in the phosphor is a value that is greater than the weight percentage value calculated from the amount of oxygen feed. This is considered to be because the oxygen is not only contained in the phosphor structure, but also exists by being adsorped to the surface of the phosphor particles in the phosphor pertaining to Example 6 to Example 10. Meanwhile, with respect to the analysis value of the nitrogen concentration, roughly the same amount of nitrogen as the amount of nitrogen feed is contained in the sample. Based on this result, it is considered that hardly any nitrogen exists separately from the generated phase structure, and nitrogen is contained in the phosphor structure.

### (2) Relationship of Oxygen Concentration in Phosphor and X-ray Diffraction Pattern

It has been discovered that the emission intensity of phosphor decreases from Example 6 toward Example 10. Incidentally, when the emission intensity of Example 6 is 100% at a relative intensity, the phosphor of Example 7 has a relative intensity of roughly 70%, and the phosphor of Examples 8 to 10 was 40% or less.

Here, the relationship of the amount of oxygen contained in the phosphor structure of Example 6 to Example 10 and the X-ray diffraction pattern is explained with reference to Fig. 4-A to G. As evident from Fig. 4-A to G, pursuant to the increase of the amount of oxygen in the phosphor, it has been discovered that the Bragg angle (2θ) of the characteristic peaks in the range beginning with 36.5° to 37.5°, 41.9° to 42.9°, as well as 40.9° to 41.9°, 56.3° to 57.3°, 66.0° to 67.0°, 75.8° to 76.8° and 81.0° to 83.0° shifts toward the high angle side, and approaches the CaAlSiN₃ crystal described in the JCPDS card. Nevertheless, pursuant to the increase of the amount of oxygen in the phosphor, since the X-ray diffraction peak intensity also weakens, it is considered that the crystalline characteristics will also deteriorate.

This is considered to be because the crystal structure changes as a result of the amount of oxygen contained in the phosphor structure increases. Further, in the case of using 0.50mol or more of CaO and increasing the amount of oxygen feed as in Example 8, Example 9 and Example 10, it is considered that the emission intensity will deteriorate due to the generation of impurity phases and residual unreacted raw materials.

Therefore, from the perspective of obtaining phosphor having high emission intensity, it has been discovered that, when the relative intensity of the diffraction peak with the strongest intensity in the powder X-ray diffraction pattern measured with CoK α radiation is 100%, the phosphor shown in Example 6 and Example 7 in which the Bragg angle (2θ) of the primary peak showing the diffraction peak having a relative intensity or 10% or more is in the range of 36.5° to 37.5° and 41.9° to 42.9°, the characteristic peak is subsequently in the range of 56.3° to 57.3°, and the characteristic peak is subsequently in the range of 40.9° to 41.9°, 66.0° to 67.0°, 75.8° to 76.8° and 81.0° to 83.0° is preferable.

### (3) Relationship of Oxygen Concentration in Phosphor and Peak Wavelength of Emission Wavelength

It has been discovered that the peak wavelength of the emission wavelength of the phosphor became shorter from 654nm to 611nm in Example 6 toward Example 10.

### (4) Relationship of Oxygen Concentration in Phosphor and Luminance

It has been discovered that the luminance of phosphor in the respective Examples 6 to 10 is roughly constant. This is considered to be because, in relation to the emission intensity of the phosphor deteriorating from Example 6 toward Example 10, the peak wavelength of emission also deteriorating, and, by entering the high visibility area of human beings, the luminance value shows a roughly constant value.

### (5) Relationship of Oxygen Concentration in Phosphor and Chromaticity of Emission

In Example 6 to Example 10, it has been discovered that the chromaticity x of the emission of phosphor in the respective Examples was within a preferable range of 0.5 to 0.7, and the chromaticity y of the emission was within a preferable range of 0.3 to 0.5.

### (Comparative Example 1)

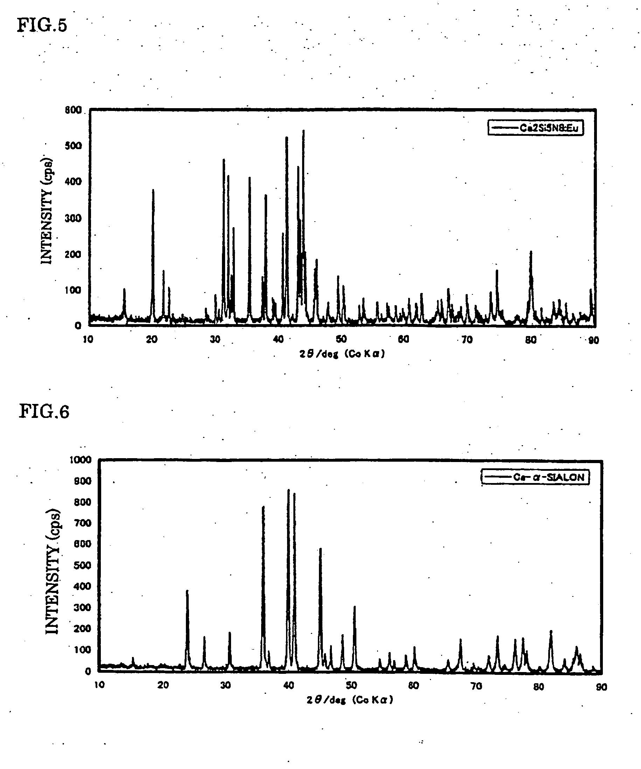

In accordance with Patent Documents 4 and 5 described above, Ca₂Si₅N₈:Eu phosphor was prepared, and the X-ray diffraction pattern was measured. This measurement result is shown in Fig. 5. As a result of comparing the X-ray diffraction peak obtained in Fig. 5 and the structural analysis result in the document, Schlieper and Schnick : Nitridosilicate I, Hochtemperatursynthese und Kristallstruktur von Ca2Si5N8, Z.anorg.allg.Che. 621, (1995), p.1037, it has been confirmed that this phosphor is the Ca2Si5N8:Eu phosphor described in Translated National Publication of Patent Application No. 2003-515655 and Japanese Patent Laid-Open Publication No. 2003-277746. The crystal system of this phosphor is of a monoclinic system, whereas the phosphor pertaining to the present invention had an entirely different structure.

### (Comparative Example 2)

In accordance with Patent Document 3 described above, a-sialon phosphor was prepared, and the X-ray diffraction pattern was measured. Here, a-sialon is an oxynitride ceramic having an intermediate composition of nitride and oxide, and comprises the four elements of silicon, aluminum, oxygen and nitrogen, Al substitutes the Si site, and O substitutes the N site in the α-Si₃N₄ and becomes a solid solution, and has a tetrahedron framework of (Si, Al) (O, N)₄, and, unlike the β-sialon, metal M (M:Li, Mg, Ca, Y and lanthanide metal excluding La and Ce, 0<x=2) can be made to be a solid solution. As a result, the X-ray diffraction peak of the a-sialon phosphor will show a diffraction pattern that is similar to the a-Si₃N₄ X-ray diffraction peak. The measurement result is shown in Fig. 6.

The X-ray diffraction peak shown in Fig. 6 is a pattern similar to a-Si₃N₄. Thus, as a result of further comparing this with the sialon diffraction pattern reported in the JCPDS, the X-ray diffraction peaks coincided, and it has been confirmed that the phosphor pertaining to the conventional technology shown in Fig. 6 is the a-sialon phosphor described in Patent Document 3. The crystal system of the a-sialon is a hexagonal system, and this was also an entirely different structure in relation to the phosphor pertaining to the present invention.

### (Example 11)

Commercially available Ca₃N₂(2N), AlN(3N), Si₃N₄(3N), Eu₂O₃(3N) were prepared, the respective raw materials were weighed such that the molar ratio of the respective elements would become Ca:Al:Si:Eu =0.985:1:1:0.015, and mixed in a glove box under a nitrogen atmosphere with a mortar. The mixed raw material was heated under a nitrogen atmosphere having a pressure of 0.05MP to 1500°C at a temperature rising speed of 15°C/min., and retained and fired at 1500°C for 3 hours, and cooled from 1500° C to 200° C for 1 hour to obtain a phosphor having a composition formula of Ca_{0.985}SiAlN₃:Eu_{0.015}.

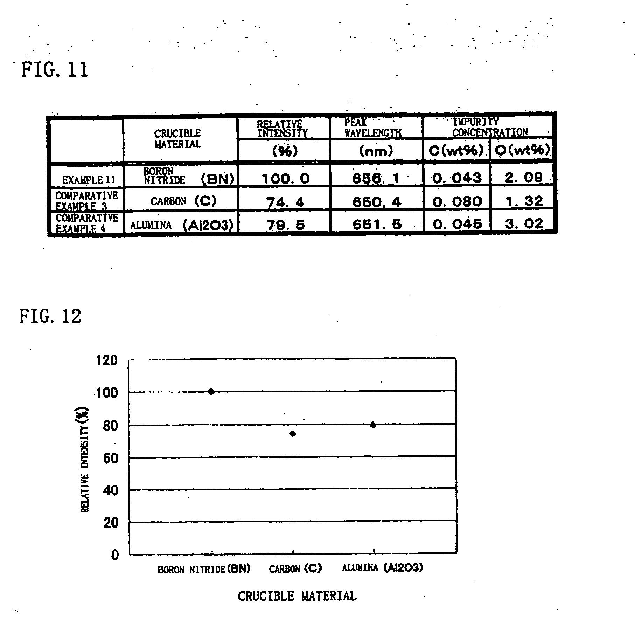

Upon irradiating monochromatic light of 460nm to the obtained phosphor powder, as shown in Fig. 11, this showed an emission of red light having a luminescence peak of 656nm. Further, the impurity oxygen concentration and impurity oxygen concentration obtained from the chemical analysis were respectively 0.043% by weight and 2.09% by weight.

### (Comparative Example 3)

Other than changing the container to be used in the firing from a boron nitride crucible to a carbon crucible, a phosphor was prepared with the same conditions as Example 11. Upon irradiating monochromatic light of 460nm to the obtained phosphor powder, this showed an emission of red light having a luminescence peak of 650nm. The relative emission intensity of the phosphor prepared in the Comparative Example, as well as the impurity carbon concentration and impurity carbon concentration obtained from the chemical analysis are shown in Fig. 11.

As shown in Fig. 11 and Fig. 12, the phosphor prepared with a carbon crucible as the firing vessel resulted in an approximately 26% reduction in the emission intensity in comparison to the phosphor of Example prepared with the boron nitride crucible. With the phosphor prepared with the carbon crucible, since the amount of impurity carbon increased 0.080% by weight, it is considered that the impurity carbon deteriorated the emission intensity.

### (Comparative Example 4)

Other than changing the container to be used in the firing from a boron nitride crucible to an alumina crucible, a phosphor was prepared with the same conditions as Example 11. Upon irradiating monochromatic light of 460nm to the obtained phosphor powder, this showed an emission of red light having a luminescence peak of 652nm. The relative emission intensity of the phosphor prepared in the Comparative Example, as well as the impurity carbon concentration and impurity oxygen concentration obtained from the chemical analysis are shown in Fig. 11.

As shown in Fig. 11 and Fig. 12, the phosphor prepared with an alumina crucible as the firing vessel resulted in an approximately 20% reduction in the emission intensity in comparison to the phosphor of Example prepared with the boron nitride crucible. With the phosphor prepared with the alumina crucible, since the amount of impurity oxygen increased 3.02% by weight, it is considered that the impurity oxygen deteriorated the emission intensity.

Although the present invention has been explained based on the foregoing embodiments, the present invention shall not be limited thereby.

## Claims

1. A phosphor expressed by a composition formula of MmAaBbNn:Zz, wherein, in said phosphor, element M is at least one or more elements having the valency of II, element A is at least one or more elements having the valency of III, element B is at least one or more elements having the valency of IV, N is nitrogen, element Z is at least one or more activator elements, satisfying m+z=1, a=1, b=1, n=3, wherein the carbon content is less than 0.08% by weight.

2. A phosphor according to claim 1, wherein element M is at least one or more elements selected from Be, Mg, Ca, Sr, Ba, Zn, Cd, and Hg;
element A is at least one or more elements selected from B (boron), Al, Ga, In, Tl, Y, Sc, P, As, Sb, and Bi;
element B is at least one or more elements selected from Si, Ge, Sn, Ti, Hf, Mo, W, Cr, Pb, and Zr; and
element Z is at least one or more elements selected from rare-earth elements or transition metal elements.

3. A phosphor according to claim 1 or claim 2, wherein element A is Al, and element B is Si.

4. A phosphor according to any one of claims 1 to 3, wherein the value of the molar ratio: z/(m+z) of said element M and said activator element Z is 0.0001 or more and 0.5 or less.

5. A phosphor according to any one of claims 1 to 4, wherein element M is at least one or more elements selected from Mg, Ca, Sr, Ba, and Zn.

6. A phosphor according to any one of claims 1 to 5, wherein element Z is at least one or more elements selected from Eu, Mn, and Ce.

7. A phosphor according to claim 6, wherein element Z is Eu.

8. A phosphor according to claim 7, wherein element M is Ca.

9. A phosphor according to any one of claims 1 to 8, wherein said phosphor is in a powdered state.

10. A phosphor according to claim 9, wherein the average particle size of said phosphor is 20 µm or less and 1 µm or more.

11. A phosphor according to any one of claims 1 to 10, wherein, when the relative intensity of the diffraction peak with the strongest intensity in the powder X-ray diffraction pattern of the phosphor measured with CoKα radiation is 100%, said phosphor contains as the primary generated phase a phase showing a diffraction peak having a relative intensity of 10% or more in a range where the Bragg angle (2θ) of said X-ray diffraction pattern is 36.5° to 37.5° and 41.9° to 42.9°.

12. A phosphor according to any one of claims 1 to 10, wherein, when the relative intensity of the diffraction peak with the strongest intensity in the powder X-ray diffraction pattern of the phosphor measured with CoKα radiation is 100%, said phosphor contains as the primary generated phase a phase showing a diffraction peak having a relative intensity of 10% or more in a range where the Bragg angle (2θ) of said X-ray diffraction pattern is 36.5° to 37.5°, 41.9° to 42.9° and 56.3° to 57.3°.

13. A phosphor according to any one of claims 1 to 10, wherein, when the relative intensity of the diffraction peak with the strongest intensity in the powder X-ray diffraction pattern of the phosphor measured with CoKα radiation is 100%, said phosphor contains as the primary generated phase a phase showing a diffraction peak having a relative intensity of 10% or more in a range where the Bragg angle (2θ) of said X-ray diffraction pattern is 36.5° to 37.5°, 40.9° to 41.9°, 41.9° to 42.9°, 56.3° to 57.3°, 66.0° to 67.0°, 75.8° to 76.8°, and 81.0° to 83.0°.

14. A phosphor according to any one of claims 11 to 13, wherein the crystal system of said generated phase is an orthorhombic system.

15. A phosphor according to any one of claims 1 to 10, wherein the oxygen content is less than 3.0% by weight.

16. A light source having the phosphor according to any one of claims 1 to 15, and a light-emitting part which emits light of a first wavelength;
wherein a part of the light of said first wavelength is made to be an excitation source, and said phosphor is caused to emit light with a wavelength that is different from the first wavelength.

17. A light source according to claim 16, wherein the light-emitting part which emits light of said first wavelength is an LED.

18. A light source according to claim 16 or claim 17, wherein said first wavelength is a wavelength of 300 nm to 550 nm.

19. An LED having the phosphor according to any one of claims 1 to 15, and a light-emitting part which emits light of a first wavelength;
wherein a part of the light of said first wavelength is made to be an excitation source, and said phosphor is caused to emit light with a wavelength that is different from the first wavelength.

20. An LED according to claim 19, wherein said first wavelength is a wavelength of 300 nm to 550 nm.

21. A manufacturing method of a nitride phosphor according to any one of claims 1 to 15, comprising the steps of:
filling the raw material of said nitride phosphor into a firing vessel formed from a boron nitride material; and
firing the raw material in the gas including N₂, or in the gas including noble gas under a pressure of 0.1 MPa or less to manufacture a nitride phosphor.

22. A manufacturing method of a nitride phosphor according to claim 21, wherein the raw material of said nitride phosphor is fired at a temperature of 1200°C to 1700°C.

## Patentansprüche

1. Leuchtstoff, dargestellt durch die Formel MmAaBbNn:Zz, worin M mindestens ein Element oder mehrere Elemente mit der Wertigkeit II ist, A ist mindestens ein Element oder mehrere Elemente mit der Wertigkeit III, B ist mindestens ein Element oder mehrere Elemente mit der Wertigkeit IV, N ist Stickstoff, Z ist mindestens ein Aktivatorelement oder mehrere Aktivatorelemente, m+z=1, a=1, b=1, n=3, wobei der Kohlenstoffgehalt weniger als 0,08 Gew.% beträgt.

2. Leuchtstoff nach Anspruch 1, wobei M mindestens ein Element oder mehrere Elemente ist, ausgewählt aus Be, Mg, Ca, Sr, Ba, Zn, Cd und Hg;
A ist mindestens ein Element oder mehrere Elemente, ausgewählt aus B (Bor), Al, Ga, In, TI, Y, Sc, P, As, Sb und Bi;
B ist mindestens ein Element oder mehrere Elemente, ausgewählt aus Si, Ge, Sn, Ti, Hf, Mo, W, Cr, Pb und Zr; und
Z ist mindestens ein Element oder mehrere Elemente, ausgewählt aus Seltenerdelementen und Übergangsmetallelementen.

3. Leuchtstoff nach Anspruch 1 oder 2, wobei A Al ist und B Si ist.

4. Leuchtstoff nach einem der Ansprüche 1 bis 3, wobei der Wert des molaren Verhältnisses z/(m+z) des Elements M und des Aktivatorelements Z 0,0001 oder mehr und 0,5 oder weniger beträgt.

5. Leuchtstoff nach einem der Ansprüche 1 bis 4, wobei M mindestens ein Element oder mehrere Elemente ist, ausgewählt aus Mg, Ca, Sr, Ba und Zn.

6. Leuchtstoff nach einem der Ansprüche 1 bis 5, wobei Z mindestens ein Element oder mehrere Elemente ist, ausgewählt aus Eu, Mn und Ce.

7. Leuchtstoff nach Anspruch 6, wobei Z Eu ist.

8. Leuchtstoff nach Anspruch 7, wobei M Ca ist.

9. Leuchtstoff nach einem der Ansprüche 1 bis 8, wobei der Leuchtstoff in Form eines Pulvers vorliegt.

10. Leuchtstoff nach Anspruch 9, wobei die mittlere Teilchengröße des Leuchtstoffes 20 µm oder weniger und 1 µm oder mehr beträgt.

11. Leuchtstoff nach einem der Ansprüche 1 bis 10, wobei, wenn die relative Intensität des Beugungspeaks mit der stärksten Intensität in dem Pulverröntgenbeugungsspektrum des Leuchtstoffes, gemessen mit CoKα-Strahlung, 100% beträgt, der Leuchtstoff als die primär erzeugte Phase eine Phase enthält, die einen Beugungspeak mit einer relativen Intensität von 10% oder mehr in einem Bereich aufweist, in dem der Bragg-Winkel (2θ) des Röntgenbeugungsspektrums 36,5° bis 37,5° und 41,9° bis 42,9° beträgt.

12. Leuchtstoff nach einem der Ansprüche 1 bis 10, wobei, wenn die relative Intensität des Beugungspeaks mit der stärksten Intensität in dem Pulverröntgenbeugungsspektrum des Leuchtstoffes, gemessen mit CoKα-Strahlung, 100% beträgt, der Leuchtstoff als die primär erzeugte Phase eine Phase enthält, die einen Beugungspeak mit einer relativen Intensität von 10% oder mehr in einem Bereich aufweist, in dem der Bragg-Winkel (2θ) des Röntgenbeugungsspektrums 36,5° bis 37,5°, 41,9° bis 42,9° und 56,3° bis 57,3° beträgt.

13. Leuchtstoff nach einem der Ansprüche 1 bis 10, wobei, wenn die relative Intensität des Beugungspeaks mit der stärksten Intensität in dem Pulverröntgenbeugungsspektrum des Leuchtstoffes, gemessen mit CoKα-Strahlung, 100% beträgt, der Leuchtstoff als die primär erzeugte Phase eine Phase enthält, die einen Beugungspeak mit einer relativen Intensität von 10% oder mehr in einem Bereich aufweist, in dem der Bragg-Winkel (2θ) des Röntgenbeugungsspektrums 36,5° bis 37,5°, 40,9° bis 41,9°, 41,9° bis 42,9°, 56,3° bis 57,3°, 66,0° bis 67,0°, 75,8° bis 76,8° und 81,0° bis 83,0° beträgt.

14. Leuchtstoff nach einem der Ansprüche 11 bis 13, wobei das Kristallsystem der erzeugten Phase ein orthorhombisches System ist.

15. Leuchtstoff nach einem der Ansprüche 1 bis 10, wobei der Sauerstoffgehalt weniger als 3,0 Gew.% beträgt.

16. Lichtquelle, umfassend den Leuchtstoff nach einem der Ansprüche 1 bis 15 und einen Licht emittierenden Teil, der Licht mit einer ersten Wellenlänge emittiert, wobei ein Teil des Lichts mit der ersten Wellenlänge als Anregungsquelle dient und wobei der Leuchtstoff Licht mit einer Wellenlänge emittiert, die sich von der ersten Wellenlänge unterscheidet.

17. Lichtquelle nach Anspruch 16, wobei der Licht emittierende Teil, der Licht mit der ersten Wellenlänge emittiert, eine LED ist.

18. Lichtquelle nach Anspruch 16 oder 17, wobei die erste Wellenlänge eine Wellenlänge von 300 nm bis 550 nm ist.

19. LED, umfassend den Leuchtstoff nach einem der Ansprüche 1 bis 15 und einen Licht emittierenden Teil, der Licht mit einer ersten Wellenlänge emittiert, wobei ein Teil des Lichts mit der ersten Wellenlänge als Anregungsquelle dient und wobei der Leuchtstoff Licht mit einer Wellenlänge emittiert, die sich von der ersten Wellenlänge unterscheidet.

20. LED nach Anspruch 19, wobei die erste Wellenlänge eine Wellenlänge von 300 nm bis 550 nm ist.

21. Verfahren zum Herstellen eines Nitridleuchtstoffes nach einem der Ansprüche 1 bis 15, umfassend die folgenden Schritte:
das Einfüllen des Ausgangsmaterials für den Nitridleuchtstoff in einen Brennbehälter, der aus einem Bornitridmaterial hergestellt wurde; und
das Brennen des Ausgangsmaterials in einem Gas, das N₂ enthält, oder in einem Gas, das ein Edelgas enthält, unter einem Druck von 0,1 MPa oder weniger, um den Nitridleuchtstoff zu erhalten.

22. Verfahren zum Herstellen eines Nitridleuchtstoffes nach Anspruch 21, wobei das Ausgangsmaterial für den Nitridleuchtstoff bei einer Temperatur von 1200°C bis 1700°C gebrannt wird.

## Revendications

1. Substance luminescente représentée par une formule de composition MmAaBbNn:Zz dans laquelle, dans ladite substance luminescente, l'élément M est au moins un ou plusieurs éléments ayant la valence II, l'élément A est au moins un ou plusieurs éléments ayant la valence III, l'élément B est au moins un ou plusieurs éléments ayant la valence IV, N est l'azote, l'élément Z est au moins un ou plusieurs éléments activateurs, satisfaisant m + z = 1, a = 1, b = 1, n = 3, où la teneur en carbone est inférieure à 0,08 % en poids.

2. Substance luminescente selon la revendication 1,
dans laquelle l'élément M est au moins un ou plusieurs éléments choisis parmi Be, Mg, Ca, Sr, Ba, Zn, Cd et Hg ;
l'élément A est au moins un ou plusieurs éléments choisis parmi B (bore), Al, Ga, In, Tl, Y, Sc, P, As, Sb et Bi ;
l'élément B est au moins un ou plusieurs éléments choisis parmi Si, Ge, Sn, Ti, Hf, Mo, W, Cr, Pb et Zr ; et
l'élément Z est au moins un ou plusieurs éléments choisis parmi les éléments des terres rares ou les éléments des métaux de transition.

3. Substance luminescente selon la revendication 1 ou la revendication 2, dans laquelle l'élément A est Al, et l'élément B est Si.

4. Substance luminescente selon l'une quelconque des revendications 1 à 3, dans laquelle la valeur du rapport molaire z/(m + z) dudit élément M et dudit élément activateur Z est de 0,0001 ou plus et de 0,5 ou moins.

5. Substance luminescente selon l'une quelconque des revendications 1 à 4, dans laquelle l'élément M est au moins un ou plusieurs éléments choisis parmi Mg, Ca, Sr, Ba et Zn.

6. Substance luminescente selon l'une quelconque des revendications 1 à 5, dans laquelle l'élément Z est au moins un ou plusieurs éléments choisis parmi Eu, Mn et Ce.

7. Substance luminescente selon la revendication 6,
dans laquelle l'élément Z est Eu.

8. Substance luminescente selon la revendication 7,
dans laquelle l'élément M est Ca.

9. Substance luminescente selon l'une quelconque des revendications 1 à 8, dans laquelle ladite substance luminescente est à l'état de poudre.

10. Substance luminescente selon la revendication 9,
dans laquelle la taille moyenne de particule de ladite substance luminescente est de 20 µm ou moins et de 1 µm ou plus.

11. Substance luminescente selon l'une quelconque des revendications 1 à 10, dans laquelle, lorsque l'intensité relative du pic de diffraction avec la plus forte intensité dans le diagramme de diffraction des rayons X des poudres de la substance luminescente mesurée avec un rayonnement CoKα est de 100 %, ladite substance luminescente contient comme phase primaire générée une phase présentant un pic de diffraction ayant une intensité relative de 10 % ou plus dans une gamme où l'angle de Bragg (2θ) dudit diagramme de diffraction des rayons X est de 36,5° à 37,5° et de 41,9° à 42,9°.

12. Substance luminescente selon l'une quelconque des revendications 1 à 10, dans laquelle, lorsque l'intensité relative du pic de diffraction avec la plus forte intensité dans le diagramme de diffraction des rayons X des poudres de la substance luminescente mesurée avec un rayonnement CoKα est de 100 %, ladite substance luminescente contient comme phase primaire générée une phase présentant un pic de diffraction ayant une intensité relative de 10 % ou plus dans une gamme où l'angle de Bragg (2θ) dudit diagramme de diffraction des rayons X est de 36,5° à 37,5°, 41,9° à 42,9° et de 56,3° à 57,3°.

13. Substance luminescente selon l'une quelconque des revendications 1 à 10, dans laquelle, lorsque l'intensité relative du pic de diffraction avec la plus forte intensité dans le diagramme de diffraction des rayons X des poudres de la substance luminescente mesurée avec un rayonnement CoKα est de 100 %, ladite substance luminescente contient comme phase primaire générée une phase présentant un pic de diffraction ayant une intensité relative de 10 % ou plus dans une gamme où l'angle de Bragg (2θ) dudit diagramme de diffraction des rayons X est de 36,5° à 37,5°, 40,9° à 41,9°, 41,9° à 42,9°, 56,3° à 57,3°, 66,0° à 67,0°, 75,8° à 76,8° et 81,0° à 83,0°.

14. Substance luminescente selon l'une quelconque des revendications 11 à 13, dans laquelle le système cristallin de ladite phase générée est un système orthorhombique.

15. Substance luminescente selon l'une quelconque des revendications 1 à 10, dans laquelle la teneur en oxygène est inférieure à 3,0 % en poids.

16. Source de lumière comportant la substance luminescente selon l'une quelconque des revendications 1 à 15, et une partie émettant de la lumière qui émet de la lumière d'une première longueur d'onde ; dans laquelle une partie de la lumière de ladite première longueur d'onde est amenée à être une source d'excitation, et ladite substance luminescente est amenée à émettre de la lumière d'une longueur d'onde différente de la première longueur d'onde.

17. Source de lumière selon la revendication 16, dans laquelle la partie émettant de la lumière qui émet de la lumière de ladite première longueur d'onde est une DEL.

18. Source de lumière selon la revendication 16 ou la revendication 17, dans laquelle ladite première longueur d'onde est une longueur d'onde de 300 nm à 550 nm.

19. DEL comportant la substance luminescente selon l'une quelconque des revendications 1 à 15, et une partie émettant de la lumière qui émet une lumière d'une première longueur d'onde ;
dans laquelle une partie de la lumière de ladite première longueur d'onde est amenée à être une source d'excitation, et ladite substance luminescente est amenée à émettre de la lumière d'une longueur d'onde différente de la première longueur d'onde.

20. DEL selon la revendication 19, dans laquelle ladite première longueur d'onde est une longueur d'onde de 300 nm à 550 nm.

21. Procédé de fabrication d'une substance luminescente à base de nitrure selon l'une quelconque des revendications 1 à 15, comprenant les étapes consistant à :
remplir une cuve de cuisson formée d'un matériau nitrure de bore avec la matière brute de ladite substance luminescente à base de nitrure ; et
cuire la matière première dans le gaz comprenant du N₂, ou dans le gaz comprenant un gaz noble sous une pression de 0,1 MPa ou moins pour fabriquer une substance luminescente à base de nitrure.

22. Procédé de fabrication d'une substance luminescente à base de nitrure selon la revendication 21, dans lequel la matière première de ladite substance luminescente à base de nitrure est cuite à une température de 1 200 °C à 1 700 °C.
